# EUROPÄISCHE PATENTSCHRIFT

(11) **EP 3 889 806 B1**
(45) Veröffentlichungstag und Bekanntmachung des Hinweises auf die Patenterteilung: **28.08.2024**
(21) Anmeldenummer: 21153224.7
(22) Anmeldetag: 27.12.2017
(51) Int. Cl.: G06F 16/906, G06F 16/901, G06F 16/51

(54) **BITSEQUENZBASIERTES DATENKLASSIFIKATIONSSYSTEM**
BIT SEQUENCE-BASED DATA CLASSIFICATION SYSTEM
SYSTÈME DE CLASSIFICATION DES DONNÉES BASÉ SUR LES SÉQUENCES DE BITS

(30) Priorität: 30.12.2016 DE 102016226338
(43) Veröffentlichungstag der Anmeldung: 06.10.2021
(62) Teilanmeldung aus: 17826526.0
(73) Patentinhaber: Bundesdruckerei GmbH, 10969 Berlin (DE)
(72) Erfinder: KOMAROV, Ilya, 13507 Berlin (DE); PAESCHKE, Manfred, 16348 Wandlitz (DE)
(74) Vertreter: Richardt Patentanwälte PartG mbB

(56) Entgegenhaltungen:
- US-A1- 2014 314 313

## Beschreibung

### Technisches Gebiet

Die vorliegenden Darstellungen betreffen IT-Systeme und insbesondere Klassifizierungsverfahren im Kontext von Datenbankmanagementsystemen.

### Stand der Technik

Aus dem Stand der Technik sind verschiedene Ansätze zur Datenklassifikation bekannt.

Beispielsweise können Dokumente oder Datensätze anhand der in diesen vorkommenden Wörtern klassifiziert werden. Die einzelnen Wörter innerhalb eines Dokuments werden automatisch mittels eines Textanalyse-Algorithmus erkannt. Bei sog. Co-occurrence-basierten Verfahren werden die Dokumente in Abhängigkeit von Art und/oder Anzahl der gemeinsam beinhalteten Wörter in Klassen ähnlicher Dokumente klassifiziert. Auch im Kontext der Bildanalyse werden digitale Bilddaten zunächst aufwändig analysiert um bestimmte Strukturen (Zellmembranen, Kerne, Organelle) zu identifizieren und anhand dieser Merkmale größere Strukturen zu identifizieren und zu klassifizieren (z.B. Krebszellen, Gefäße, Nervenzellen, u.a.). Die Aufbereitung der Daten für den Klassifizierungsalgorithmus sowie die Klassifikation selbst ist rechnerisch oftmals sehr aufwändig und erfordert umfangreiches Hintergrundwissen des Programmierers im Hinblick auf die zu erwartenden Objektklassen. US Patentanmeldung US2014314313 offenbart ein Verfahren zur Abfrage von Produktbildern.

### Technisches Problem und grundlegende Lösungen

Mit den bekannten Klassifizierungsverfahren ist es oftmals nicht möglich, eine Klassifikation großer Mengen von Objekten auf schnelle, ressourcenschonende Weise (z.B. in Echtzeit auf einem Standardcomputersystem) durchzuführen. Bei der Klassifikation geschehen Fehler, da unvollständiges Wissen oder falsche Vorstellungen über die zu erwartenden Klassen zur Implementierung einer Klassifikationslogik herangezogen wurden. Außerdem sind relevante Klassifikationsmerkmale oft gar nicht zugänglich, z.B. wenn die Daten in verschlüsselter Form vorliegen. Vor diesem Hintergrund besteht ein Bedarf, ein verbessertes Verfahren zur Klassifikation von Daten und ein entsprechendes Datenklassifikationssystem bereitzustellen, welche die vorangehend erwähnten Nachteile zumindest teilweise vermeiden.

Die der Erfindung zugrundeliegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

Die Erfindung betrifft ein computerimplementiertes Verfahren zur Bildklassifikation. Das Verfahren umfasst ein Bereitstellen einer Tokenmenge, die Token beinhaltet, die aus mehreren Feldwerten mehrerer Datensätze durch Tokenisierung erzeugt wurden. Die Token wurden aus Feldwerten von mindestens zwei unterschiedlichen Feldtypen erzeugt und sind in Form einer Bitsequenz gespeichert. Das Verfahren umfasst ferner die Analyse von einem oder mehreren Merkmalen der Token auf der Ebene der Bitsequenz, um Teilmengen merkmalsähnlicher Token zu identifizieren. Das dazu herangezogene Merkmal ist die Länge der Bitsequenz. Das Verfahren umfasst ferner das Speichern einer Kopie jeder der Teilmengen merkmalsähnlicher Token in nach Teilmengen getrennter Form. Jede Teilmengenkopie repräsentiert jeweils eine Klasse merkmalsähnlicher Daten.

Dies kann vorteilhaft sein, da dieses Klassifizierungsverfahren sehr schnell mit vergleichsweise geringem Rechenaufwand durchgeführt werden muss: es ist nicht notwendig, zunächst die Daten in höheren Ebenen der Repräsentation zu initialisieren und zu analysieren, etwa auf der Ebene von Bytes und ASCII Charakteren oder gar auf der Ebene noch komplexerer Datenobjekte, etwa als Java-Objekte, deren Analyse die Instanziierung einer entsprechenden Laufzeitumgebung erfordert. Es entfällt also ein aufwändiges Initialisieren und ggf. Parsen von Datenobjekten höherer Ordnung und die Instanziierung einer hierfür notwendigen Laufzeitumgebung. Im Stand der Technik bekannte Klassifikationsverfahren sind dagegen rechnerisch oft deutlich aufwändiger, die Texte werden z.B. mittels syntaktischer Analyse und anderer komplexer Textmining-Algorithmen (Reduktion auf den Wortstamm, Entfernung von Stopwörtern, ggf. auch "part-of-speech" (POS) Tagging, u.a.). Außerdem werden müssen basierend auf der Ebene von ASCII Charakteren analysiert.

Es ist außerdem möglich, die Daten zu klassifizieren, auch wenn über den Inhalt der Daten keine oder nur wenige Informationen vorliegen. Dies kann z.B. der Fall sein wenn die Daten in verschlüsselter Form gespeichert sind. Es wird auch vermieden, dass fehlerhafte Vorstellungen des Programmierers über die semantische Bedeutung der Feldwerte und der daraus generierten Token Einfluss auf die Klassifizierung haben, denn die Ebene erfolgt auf der Ebene von Bitsequenzmustern, also nicht auf der Ebene der ASCII Charaktere oder anderer Datenmodelle höherer Ordnung, die bereits eine gewisse Kenntnis der Struktur der Daten bzw. des Bedeutungsgehalts der Token voraussetzen. Somit kann ein weitgehend "bedeutungsagnostisches" Klassifizierungsverfahren bereitgestellt werden, da auch auf Feldwerte bzw. Token unbekannten Inhalts angewendet werden, also z.B. auf verschlüsselte Feldwerte oder auf Datenfelder, bei welchem aus Effizienzgründen, z.B. im Kontext einer Echtzeitumgebung, ein inhaltliches Parsing der Daten nicht möglich ist.

In einem weiteren vorteilhaften Aspekt kann das Verfahren für eine Vielzahl unterschiedlicher Bilddatentypen bzw. Daten- bzw. Dateiformaten (.jpg, .png, .tif, etc.) verwendet werden, ohne dass hierfür ein spezialisierter Parser erstellt und in den Tokenisierungsprozess aufwändig eingebunden werden müsste. Vielmehr kann derselbe Tokenisierer auf eine Vielzahl unterschiedlicher Datentypen und Datenformaten angewendet werden oder auf Feldwerten, die in einem Feld mit einem generischen Datentyp gespeichert sind. Dies kann die Wartbarkeit, Flexibilität und Erweiterbarkeit des Klassifizierungssystems erheblich verbessern. In einem bestimmten Feld können also eine große Anzahl an unterschiedlichen Datentypen gespeichert werden. Ein Nutzer bzw. ein Applikationsprogramm, welches Datensätze in der Datenbank speichern will, muss sich also nicht um die Konsistenz und Passung von Datentypen kümmern. Außerdem verhindert die Verwendung von Feldtypen, die nicht auf einen bestimmten Datentyp (wie zum Beispiel Integer, Boolean, Varchar, etc.), beschränkt sind, bzw. denen ein sehr generischer Datentyp zugewiesen ist, dass ein unberechtigter Dritter, der sich Zugriff auf den Index verschafft hat, anhand der indizierten Datentypen Rückschlüsse auf den Inhalt der Attribute der ursprünglichen Datensätze ziehen kann.

Nach Ausführungsformen sind die Merkmale, die für die Ähnlichkeitsanalyse der Token analysiert werden, frei von Informationen bezüglich Bytesequenzen oder sonstiger Muster in höheren Ebenen der Datenrepräsentation. Es ist also nicht notwendig, die Token mittels datentypspezifischer Parser zu analysieren bzw. es wird eine aufwändige Repräsentation der in der Bitsequenz eines Tokens enthaltenen Daten auf einer höheren strukturellen Ebene vermieden.

Nach Ausführungsformen umfasst das Verfahren ferner eine Erzeugung eines Teilindex aus jeder der Teilmengen merkmalsähnlicher Token und eine Bereitstellung eines Indexauswahlprogramms. Das Indexauswahlprogramm ist dazu konfiguriert, automatisch denjenigen der Teilindices zu identifizieren, dessen Token dem Datenwert bezüglich Bitsequenz und/oder Bitsequenzlänge am ähnlichsten ist.

Nach Ausführungsformen wird die Tokenmenge als durchsuchbarer Index gespeichert oder wird zur Erstellung eines durchsuchbaren Index verwendet.

Das Verfahren kann den Empfang einer Suchanfrage, die einen Suchwert beinhaltet, umfassen. Als Antwort auf den Erhalt der Suchanfrage erfolgt eine Analyse des Suchwerts durch ein Indexauswahlprogramm und eine Identifikation desjenigen der Teilindices, dessen Token dem Suchwert bezüglich Bitsequenz und/oder Bitsequenzlänge am ähnlichsten ist. Sodann erfolgt ein Durchsuchen des identifizierten Teilindex anstatt des (Gesamt-)Index nach dem Suchwert.

Dies kann vorteilhaft sein, da der Arbeitsspeicherbedarf beim Indexzugriff reduziert wird: es muss nicht mehr der Gesamte Index in den Arbeitsspeicher geladen und durchsucht werden, sondern nur noch ein Teilindex. Es werden also weniger Rechenoperationen beim Durchsuchen des Index benötigt, das Laden des Index in den Arbeitsspeicher ist schneller und es wird nur ein geringerer Teil des Arbeitsspeichers belegt.

Vorzugsweise erfolgt die Generierung der Teilindices aus dem Gesamtindex vollautomatisch. Es ist dabei besonders vorteilhaft dass eine manuelle Erstellung der Teilindices bzw. eine manuelle Spezifikation der Kriterien, wann ein Token in welchen Teilindex zu speichern ist bzw. welcher Teilindex bei der Suche nach einem bestimmten Suchwert verwendet werden soll nicht mehr notwendig ist.

Nach Ausführungsformen umfasst das Verfahren eine Identifizierung eines indizierten Tokens innerhalb des identifizierten Teilindex, welcher identisch ist zu dem Suchwert und eine Analyse von Datensatz-Zeigern, die in dem Teilindex mit dem identifizierten Token verknüpft gespeichert sind, um ein oder mehrere der Datensätze zu identifizieren, welche ein oder mehrere Feldwerte beinhalten, aus welchen das indizierte Token erzeugt wurde, wobei die Datensätze in einer Datenbank gespeichert sind. Ferner erfolgt eine Zurückgabe der ein oder mehreren identifizierten Datensätze oder einer Referenz auf die ein oder mehreren identifizierten Datensätze als Antwort auf die Suchanfrage. Jeder der Teilindices kann somit zur raschen Identifikation desjenigen Datensatzes bzw. derjenigen Datensätze verwendet werden, der einen oder mehrere Feldwerte beinhaltete, aus welchen das identifizierte Token erzeugt wurde. Somit können die gewonnenen Teilindices im Kontext klassischer Datenbankapplikationen verwendet werden um diese zu beschleunigen.

Nach Ausführungsformen umfasst das Verfahren einen Empfang einer Schreibanfrage, wobei die Schreibanfrage einen Datenwert (z.B. einen Feldwert - z.B. DR8.F6) beinhaltet. Als Antwort auf den Empfang der Schreibanfrage erfolgt eine automatische Zerlegung des empfangenen Datenwerts durch die Tokenisierungslogik, die zur Tokenisierung der Datensätze verwendet wurde, in mehrere neue Token. Jedes neue Token wird als Bitsequenz in einem flüchtigen oder nicht-flüchtigen Speichermedium gespeichert. Zudem erfolgt eine Analyse jedes der neuen Token durch ein Indexauswahlprogramm. Das Indexauswahlprogramm identifiziert denjenigen der Teilindices, dessen Token dem neuen Token bezüglich Bitsequenz und/oder Bitsequenzlänge am ähnlichsten ist. Schließlich erfolgt ein Speichern des neuen Token in dem identifizierten Teilindex zusätzlich zu oder anstelle von Speicherung des neuen Token in einem Gesamtindex der Token.

Somit kann der Aufbau eines großen Index bzw. das stetige Wachsen des bestehenden Gesamtindex vermieden werden. Vielmehr können neue Token direkt in die jeweiligen Teilindices geschrieben werden. Beispielsweise kann das Indexauswahlprogramm z.B. regelbasiert arbeiten. Die Regeln können automatisch anhand der Ergebnisse der Klassifizierung (Anzahl und Art der gebildeten Token-Teilmengen) oder manuell vorgegeben werden. Die manuelle Vorgabe kann von einem Nutzer vorgenommen werden, der die Ergebnisse der Klassifizierung in explizite Regeln übersetzt (z.B. kann ein Nutzer mittels einer graphischen Benutzeroberfläche (GUI) die automatisch identifizierten Teilmengen der Token analysieren und feststellen, dass die Token anhand ihrer Bildgröße aufgeteilt wurden in eine erste Token-Teilmenge, deren Token weniger als 500 Bits umfasst, eine weitere Token-Teilmenge, deren Token zwischen 501 und 1000 Bits umfasst und eine weitere Token-Teilmenge, deren Token über 1001 Bits umfassen. Der Nutzer kann nun Regeln mittels der GUI spezifizieren, die vorgeben, dass neu erstellte Token in Abhängigkeit ihrer Bitsequenzlänge in eine der drei genannten Token-Teilmengen gespeichert wird.

Die Verwendung von Bitsequenzlängen als Klassifizierungskriterien kann vorteilhaft sein, da diese Merkmale bereits auf der untersten "strukturellen" Ebene, der Ebene der Bitsequenz selbst, erkannt werden können. Es ist also keine Instanziierung und Repräsentanz von Token auf höheren strukturellen Ebenen erforderlich um an diese Merkmale zu gelangen.

Die Klassifizierung anhand der Token-Bitsequenzlänge kann vorteilhaft sein, da diese Form der Klassifizierung bzw. der automatischen Erstellung von Teilindices in einer Vielzahl von Anwendungsszenarien verwendet werden kann, insbesondere im Kontext von Portalen und Plattformen, die der Verwaltung von Bildern dienen. Beispielsweise kann die Klassifikationssoftware zur Erstellung und Verwaltung eines Bildarchivs verwendet werden, in welchem es Bilder einer Vielzahl (vorher unbekannter) Bildgrößen gibt. Der Klassifizierer kann z.B. ein nichtüberwachter (nonsuperwised) Klassifizierer sein, der automatisch selbst erkennt ob die Bilder anhand ihrer Größe in zwei, drei oder noch mehr Teilmengen ähnlicher Größe aufgeteilt werden sollten. Beispielsweise kann der Klassifizierer zur Verwaltung von Bildern eines Homepageportals verwendet werden, in welchem es hunderte von kleinen Bildern (Thumbnail Bilder) und großen Bildern (Originale) gab. Die Tokenisierungslogik erkennt z.B. anhand bestimmter Bitmuster den Beginn und das Ende eines Bildes in einer Bitsequenz, z.B. Beginn und Ende eines .jpg Bildes, und verwendet diese Grenzen um ein Token zu erzeugen, das ein entsprechendes Bild codiert. Die Klassifizierungslogik analysiert die Bitsequenz der einzelnen Token um entsprechende Teilmengen der Bilder automatisch zu generieren, die eine ähnliche Größe haben und, z.B. zu archivierungszwecken, in getrennten Speicherbereichen gespeichert werden.

Das Verfahren wird zur automatischen Bildklassifizierung verwendet. Bei den Token handelt es sich um Bitsequenzen, die jeweils ein Bild kodieren, wobei die Bitsequenzlänge die Bildgröße repräsentiert. Die Teilmengen der Token beinhalten zumindest eine "Kleinbild-Teilmenge" und eine "Großbild-Teilmenge". In der "Kleinbild-Teilmenge" sind selektiv Token enthalten, deren Bitsequenzlänge unterhalb eines ersten Schwellenwerts liegt. In der "Großbild-Teilmenge" sind selektiv Token enthalten, deren Bitsequenzlänge einen zweiten Schwellenwert überschreitet.

Somit kann eine automatische Klassifizierung von Bildern anhand deren Auflösung bzw. Qualität vorgenommen werden.

Nach Ausführungsformen ist die Anzahl der Teilmengen unbekannt bei Analysebeginn. Vielmehr wird die Anzahl der gebildeten Token-Teilmengen dynamisch als Teil des Ergebnisses der Analyse der Merkmale der Token ermittelt. Die Analyse zur Identifikation der Teilmengen merkmalsähnlicher Token wird von einem nichtüberwachten Machinelearning Algorithmus durchgeführt.

Dies kann vorteilhaft sein, da die Anzahl der Token-Teilmengen bzw. der aus diesen gebildeten Teilindices "data-driven", also in Abhängigkeit der analysierten Token, dynamisch ermittelt wird. Dadurch wird vermieden, dass durch falsche (Vor)annahmen des Programmierers bezüglich der zu erwartenden Klassen eine unnötige "Zersplitterung" ähnlicher Token in viele unterschiedliche Teilmengen oder Teilindices oder eine Zusammenfassung zu vieler unähnlicher Token in einen (zu großen) Teilindex erfolgt. Beides kann die Performance reduzieren: ein zu großer Teilindex belegt unnötig viel Arbeitsspeicher, zu viele zu kleine Teilindices verursachen zusätzliche Kosten was den Aufwand der Initialisierung und Verwaltung der Teilindices angeht.

Nach der automatischen Erstellung der Token-Teilmengen kann ein Mensch oder eine Programmlogik (Software, Firmware oder Hardware) die Token-Teilmengen analysieren und von Hand oder automatisch Regeln für einen Index-Selektor zu definieren. Der Index-Selektor ist eine Programmlogik, die diese Regeln auf einen Eingangswert (z.B. ein Suchwert) anwendet, um einen Teilindex auszuwählen/eine Teiltokenmenge (z.B. bildgrößenabhängiges Bilderarchiv-Directory) auszuwählen, um neues Bild in passendem Teilindex/Teilarchiv-Directory zu speichern.

Nach Ausführungsformen sind die Datensätze in verschlüsselter Form in einer Datenbank gespeichert. Das Bereitstellen der Tokenmenge umfasst eine Anwendung einer Tokenisierungslogik auf die verschlüsselten Feldwerte der Datensätze auf der Bitsequenzebene der um die Token zu generieren. Die Analyse der Merkmale der Token erfolgt auf der Ebene der Bitsequenz der Token. Die Teilmengen merkmalsähnlicher Token umfassen jeweils Token, die sich im Hinblick auf ihre Bitsequenz und/oder die Länge ihrer Bitsequenz ähneln.

Nach Ausführungsformen umfasst das Verfahren ferner eine Verwendung der Teilmengen merkmalsähnlicher Token jeweils als Input eines Dekodieralgorithmus, wobei die Teilmengen jeweils einen Kandidaten für ein natürlichsprachliches Wort oder einen anderen von einem Menschen interpretierbaren Code repräsentieren und wobei der Dekodieralgorithmus dazu ausgebildet ist, durch Analyse der Token einer Teilmenge das natürlichsprachliche Wort oder den anderen von einem Menschen interpretierbaren Code zu identifizieren.

Nach Ausführungsformen umfasst das Verfahren ein Bereitstellen eines DBMS, das dazu konfiguriert ist, die Datensätze jeweils als eine Menge aus mehreren Feldwerten zu speichern. Die Feldwerte werden dabei jeweils in einem Feld gespeichert.

Die Erzeugung der Tokenmenge kann ein Erzeugen von ersten und zweiten Token umfassen. Die ersten Token werden aus ersten Feldwerten mehrerer Datensätze erzeugt, wobei die ersten Feldwerte in ersten der Felder gespeichert sind, wobei die ersten Felder einem ersten Feldtyp angehören. Die zweiten Token werden aus zweiten Feldwerten der mehreren Datensätze erzeugt. Die zweiten Feldwerte sind in zweiten der Felder gespeichert. Die zweiten Felder gehören einem zweiten Feldtyp an.

Dies kann vorteilhaft sein, da die auf diese weite generierte Tokenmenge bzw. der auf diese Weise generierte Gesamtindex oder die Teilindices, sollten diese z.B. durch Datendiebstahl in die Hände unberechtigter Dritter gelangen, deutlich weniger an potentiell sensible Informationen preisgeben als dies bei herkömmlichen Datenbankindices der Fall ist.

Klassischerweise wird je ein Index für den Inhalt einer bestimmten Tabellenspalte generiert. Eine Tabellenspalte repräsentiert dabei oftmals ein bestimmtes Attribut von Datenobjekten, die in der jeweiligen Tabelle gespeichert sind. D.h., klassischerweise kann für eine Tabelle "Angestellte" beispielsweise ein Index für die Spalte "Vorname", ein weiterer Index für die Spalte "Nachname", ein weiterer Index für die Spalte "Position", ein weiterer Index für die Spalte "Geburtsjahr", ein weiterer Index für die Spalte "Personalausweis-ID" usw. erstellt werden. Sollten all diese Indexstrukturen für die Tabelle "Angestellte" in falsche Hände geraten, so ist es für unberechtigte Dritte ein leichtes, anhand der Indexstrukturen die vollständigen Datensätze, die in der Tabelle gespeichert sind, zu rekonstruieren. Da die Felder einzelnen indexiert sind, ist anhand des Indexnamens oder zumindest anhand des Inhalts in der Regel klar ersichtlich, für welche Art von Attributen ein in einem Index gespeicherter Datenwert steht. Sogar für den Fall dass die Tabelle "Angestellte" keine Klarnamen, sondern stattdessen numerische Pseudonyme enthält, wird anhand der Indexstruktur deutlich, dass ein numerischer Wert, der in der Spalte "Name" bzw. "Pseudonym" gespeichert ist, die Funktion eines Identifikators des entsprechenden Datensatzes und nicht einfach ein beliebiges Attribut des Objekts repräsentiert.

Demgegenüber beinhaltet die Tokenmenge bzw. der Index/die Teilindizes, die gemäß Ausführungsformen der Erfindung erstellt werden, einen deutlich erhöhten Schutz der in ihm gespeicherten Daten. Dies liegt daran, dass die Feldwerte zumindest einiger der Felder der Datensätze tokenisiert werden. Ein (Teil)-Index, der auf diesen Token aufbaut, und der die Token unabhängig von dem Typ des Feldes, von welchen diese stammen, in der Indexstruktur speichert, lässt also keine Rückschlüsse darauf zu, ob ein bestimmtes Token den gesamten Feldwerte repräsentiert oder nur einen Teil davon, und lässt auch keinen Rückschluss darauf zu von welchem Feldtyp es abstammt. Ein bestimmter indizierter Zahlenwert in dem Index kann also gleichermaßen den Geburtstag des Angestellten, ein Erscheinungsdatum eines Artikels, in welchem über den Angestellten berichtet wird, eine ID des Angestellten, eine ID eines Presseartikels, in welchem über den Angestellten berichtet wird, eine Kennung eines Personalausweises, eines Kraftfahrzeugs, eines Geschenk-Gutscheins des Angestellten oder sonst eines beliebigen Attributes sein, welches mit einem bestimmten Objekt/Angestellten in mehr oder weniger enger semantische Beziehung steht.

Ausführungsformen der Erfindung stellen somit einen "chaotischen" bzw. "obfuszierten" Suchindex bereit, der sogar dann, falls er unbeabsichtigterweise an unberechtigte Dritte gelangt, oftmals keinen Rückschluss auf den Inhalt der in diesem indizierten Datensätze zulässt. Sensible Datensätze werden also erst dann semantisch transparent, wenn zusätzlich zu dem Index auch die eigentlichen Datensätze gestohlen werden. Vorzugsweise beinhaltet jeder Datensatz oder zumindest die Mehrzahl aller Datensätze eine Vielzahl von Feldern, von welchen wiederum viele Felder einen Datenwert beinhalten, der sich jeweils in eine Vielzahl unterschiedlicher Token zerlegen lässt. Dadurch kann sichergestellt werden, dass der Sinngehalt der einzelnen Datensätze rein anhand des Index nicht rekonstruiert werden kann, obwohl sämtliche Token, die aus den Feldwerten eines Datensatzes generiert und in dem Index gespeichert wurden, auf den Datensatz, von welchem sie stammen, referenzieren. Somit können Ausführungsformen der Erfindung einen Suchindex bereitstellen, welcher "security by obscurity" für die in ihm indizierten Daten bietet.

Beispielsweise können die Datensätze, die jeweils ein bis mehrere Datenwerte beinhalten, an eine Datenbank, z.B. eine Mitarbeiterdatenbank einer Firma, bereitgestellt werden und in der Datenbank so gespeichert werden, dass die Datenwerte je in unterschiedliche Felder gespeichert werden. Bei den unterschiedlichen Feldern kann es sich beispielsweise um Felder wie "Vorname", "Nachname", "Funktion in der Firma", "Portraitfoto", "Geburtsdatum", "Personalnummer", "Kreditkartennummer", und "verantwortetes Produktportfolio" handeln. Die Felder der Datenbank können also bestimmten semantischen Kategorien zugeordnet sein, ohne dass jedoch alle Felder auf einen bestimmten Datentyp festgelegt sind. Beispielsweise kann das Feld "verantwortetes Produktportfolio" eine bei den meisten Mitarbeitern eine Zusammenstellung aus Bilddaten der jeweiligen Produkte, Textdaten die die Produkte beschreiben, sowie ggf. audiovisuelle Daten zu den Produkten oder zu dem Mitarbeiter. Es ist also möglich, dass ein oder mehrere oder auch alle Felder der Datenbank nicht auf einen bestimmten Datentyp beschränkt sind. Typischerweise werden in manchen Feldern, z.B. "Geburtstag", nur Datumswerte gespeichert sein, im Feld "Kreditkarte" nur Zahlenwerte, aber zumindest manche Felder, wie z.B. "verantwortetes Produktportfolio" enthalten eine Mischung von Datenwerten unterschiedlichen Typs, und auch die Felder, die aufgrund der Programmlogik, die die Datenwerte in die jeweiligen Felder schreibt, nur Daten eines bestimmten Typs enthalten, können Felder sein, die vom DBMS, das die Datenbank verwaltet, nicht auf einen Datentyp beschränkt sind.

Vorzugsweise ist die Programmlogik, die die Datensätze zur Speicherung in den Feldern der Datenbank bereitstellt, so konfiguriert, dass sie vordefinierte Bitmuster als Prefix und/oder Suffix von Daten, die einem bestimmten Typ angehören (z.B. Bilddaten, Bilddaten eines bestimmten Dateiformats, Bildelementen, Textdaten, Textelementen, z.B. einzelnen Wörtern oder Sätzen, Zahlenwerten, Datumsangaben, Audiodaten, Videodaten, etc.) oder die eine bestimmte vordefinierte Größe haben (0-100 bit, 101-1000 bit, > 1001 bit, etc) so einfügt, dass ein Tokenisierer, der einen Gesamtindex und/oder Teilindices der Datenbank erstellt, eine Tokenisierung der in den Feldern gespeicherten Daten dort vornimmt, wo diese vordefinierten Bitmuster eingefügt wurden. So könnte beispielweise das Bitmuster 1001101010101010011 den Beginn einer Datumsangabe spezifizieren und das Bitmuster 1001101010101010010 das Ende einer Datumsangabe spezifizieren. So könnte beispielweise das Bitmuster 1001111110101010011 den Beginn einer jpg-Bilddatei spezifizieren und das Bitmuster 1001111110101010010 das Ende einer jpg-Bilddatei spezifizieren. Beim Befüllen der Felder der Datenbank mit Datenwerten kann also beispielsweise das Feld "Geburtstag" für einen bestimmten Mitarbeiter M1 aus der Bitsequenz 1001101010101010011<BITSEQUENZ-DES-GEBURTSTAGS-1001101010101010010 bestehen, wobei BITSEQUENZ-DES-GEBURTSTAGS abhängig ist vom jeweiligen Geburtstag und der Art und Weise, wie Datumsangaben im jeweiligen DBMS im Bitformat repräsentiert werden. Das Feld "verantwortetes Produktportfolio" besteht typischerweise aus einer Mischung von Textangaben, Datumsangaben (z.B. wann ein bestimmtes Produkt auf den Markt gebracht wurde), Zahlenangaben (z.B. Produktpreis, Produktabmessungen). Die Programmlogik zur Speicherung der Datensätze würde also Datumswerte, Zahlenangaben, etc. mit entsprechenden Bitmustern als Prefix und/oder Suffix versehen, sodass die in diesem Feld gespeicherte Bitsequenz eine lange Sequenz verschiedenster Nutzdaten, eingefasst bzw. abgegrenzt von anderen Nutzdaten durch die vordefinierten Bitmuster, darstellt. Die als Prefix und/oder Suffix in die Nutzdaten bei der Speicherung eingeführten Bitmuster werden nach Ausführungsformen von dem Tokenisierer als Delimiter bei der Tokengenerierung verwendet. Der Tokenisierer würde also in dem hier beschriebenen Beispiel die in dem Feld "verantwortetes Produktportfolio" gespeicherte Bitsequenz anhand der vordefinierten Bitmuster in mehrere Token (z.B. Datumsangaben zur Markteinführung der Produkte, Zahlenangaben zu den Preisen und Abmessungen, etc) zerlegen, die dann anhand ihrer Ähnlichkeit im Hinblick auf deren Bitsequenz (z.B. gleicher Prefix und/oder gleicher Suffix) und/oder im Hinblick auf die Ähnlichkeit der Bitsequenzlänge der Token (Token, die Datumsangaben repräsentieren, haben ähnliche oder identische Länge, die sich von den Token von Bilddaten zumeist unterscheidet) klassifiziert werden und/oder zur Generierung der Teilindizes verwendet werden. Das bedeutet, dass Zahlenangaben, unabhängig davon, ob sie eine Kreditkartennummer oder die Länge oder Höhe eines verantworteten Produkts darstellen, im gleichen Teil-Index gespeichert werden. Dieser Teilindex enthält also eine Mischung aus potentiell sensiblen Daten (Kreditkartennummer) und unproblematischen Daten (Abmessungen eines Produkts) und lässt keine Rückschlüsse darauf zu, welche Bedeutung ein bestimmter Zahlenwert hat. Vorzugsweise verwendet der Tokenisierer die gleichen Bitmuster, die von der Logik zur Speicherung der Daten als Prefix und/oder Suffix in die zu speichernden Nutzdaten eingebracht wurden, zur Tokenisierung. Die explizite Einfügung von vordefinierten Bitmustern als Prefix und/oder Suffix in Bestandteile der Datenwerte der Datensätze ist jedoch nur eine mögliche Implementierung. Oftmals enthalten Daten eines bestimmten Typs oder Dateiformats, wie sie vom DBMS in Form einer Bitsequenz gespeichert werden, ohnehin bereits Bitsequenzen, die eine automatische Erkennung von Zahlenwerten in Abgrenzung etwa von Bilddaten oder ähnlichem ermöglichen. Eine explizite Ergänzung vordefinierter Bitmuster bei der Speicherung der Datensätze ist hier also nicht erforderlich. Auch erfolgt eine Klassifizierung rein anhand der Tokengröße (Länge der Bitsequenz der einzelnen Token).

Der Tokenisierer kann vorzugsweise auch zur Verarbeitung einer vom Nutzer bereitgestellten Suchbegriffs verwendet werden, sodass nach Ausführungsformen der verarbeitete Suchbegriff die gleichen Bitmuster als Prefix und/oder Suffix hat bzw. an diesen in ein Suchtoken verwandelt wird wie die in den Teilindizes gespeicherten Datenwerte.

Nach Ausführungsformen handelt es sich bei den Datensätzen um pseudonyme Datensätze, die keine Klarnamen von Personen enthalten.

Nach Ausführungsformen wird auf die ersten und zweiten Felder die gleiche, generische Tokenisierungslogik angewandt.

Dies kann in Kombination mit der Analyse auf der Bitsequenzebene vorteilhaft sein, da somit das gleiche Tokenisierungsverfahren auf eine Vielzahl von Feldern oder sogar auf alle Felder der in einer Datenbank gespeicherten Daten angewandt werden kann. Es ist also keine komplexe Tokenisierungslogik notwendig, die in Abhängigkeit unterschiedlicher Datenformate unterschiedlicher Tabellenspalten jeweils unterschiedliche Tokenisierungsalgorithmen auf "höherstrukturierten" Datenobjekten anwendet bzw. für die Tokenisierung Datenobjekte auf einer höheren strukturellen Ebene instanziiert. Somit kann die Datenbank leicht um weitere Felder erweitert werden und es können sogar unterschiedliche Datentypen in verschiedenen Feldern verwendet werden oder enthalten sein, ohne dass zwingend wesentliche Änderungen an der Tokenisierungslogik vorgenommen werden müssen. Die Kombination aus dem generischen Tokenisierer mit dem bitsequenzbasierten Klassifizierer wird somit auch bei einer Erweiterung von Datensätzen um weitere Felder im Wesentlichen das gleiche Klassifikationsergebnis der daraus generierten Token liefern. Somit wird ein Datenklassifikationsverfahren im Kontext einer Datenbank bereitgestellt, welches weitgehend robust ist gegen strukturelle Änderungen in der Datenbank, also beispielsweise dem Hinzufügen oder Entfernen von Datenfeldern bzw. "Spalten".

Optional kann die Erzeugung der Token eine Verwendung weiterer Feldwerte in ihrer Gesamtheit als weitere Token umfassen. Beispielsweise können die ersten und zweiten Felder Bitsequenzen enthalten, die einen Fließtext mit ein oder mehreren Bildern kodieren, wobei Teilsequenzen, die Bilder (und optional möglicherweise auch einzelne Wörter oder Wortsequenzen) codieren, im Zuge der Tokenisierung als Token erkannt und als Token der Tokenmenge hinzugefügt werden.

Es kann aber auch zumindest ein drittes Feld geben, in welchem nur Bilder gespeichert sind (auch wenn das Datenformat an sich nicht auf ein Bildformat beschränkt ist, z.B. weil dem dritten Feld ein generisches Datenformat oder kein Datenformat zugewiesen ist). Somit ist es durchaus möglich, dass die Tokenmenge auch Token aus Feldern von Feldtypen beinhaltet, auf die keine Tokenisierung angewandt wird oder deren Inhalt sich schlichtweg nicht von dem verwendeten Tokenisierer in einzelne Token aufteilen lässt.

Nach Ausführungsformen sind die Datensätze in einer Datenbank gespeichert, die von einem DBMS verwaltet wird. Die Datensätze umfassen unterschiedlich viele Felder. Vorzugsweise werden alle Feldwerte in allen Feldern eines Datensatzes mit derselben Tokenisierungslogik tokenisiert. Dies kann vorteilhaft sein, da eine Erzeugung zu vieler kleiner Teilindices vermieden werden kann, was z.B. dann geschehen kann, wenn für jedes Feld eigene Teilindices generiert würden. Somit kann insbesondere bei Datenbanken mit variablen Feldern und Feldtypen bzw. unbekannter Bedeutung der einzelnen Felder eine breite und gegenüber strukturellen Änderungen robuste Datenbasis für die Tokenklassifizierung geschaffen werden.

Dies kann zudem vorteilhaft sein, da ein sehr hoher Grad an Flexibilität bezüglich der Struktur und des Umfangs der Datensätze, die von dem erfindungsgemäßen DBMS verwaltet und gespeichert werden können, geboten wird.

Nach Ausführungsformen besitzen mehrere der Felder eines jeden Datensatzes ein gemeinsames, generisches Datenformat. Das generische Datenformat erlaubt die Speicherung von Feldwerten, die sowohl Textdaten als auch zumindest Bilddaten, Audiodaten und/oder Videodaten beinhalten. Somit können leicht weitere Datenfelder ergänzt werden, ohne dass hierfür eine Anpassung des Tokenisierungs- und/oder Klassifizierungsverfahrens notwendig ist.

Nach Ausführungsformen ist die Tokenisierungslogik dazu ausgebildet, die Bitsequenz eines Datenfeldwertes auf der Bitebene zu analysieren und in Abhängigkeit von darin erkannten Bitsequenzmustern die Bitsequenz in die einzelnen Token zu tokenisieren.

Dies kann vorteilhaft sein, da nicht nur die Klassifizierung, sondern schon bereits die Tokenisierung auf der Bitebene erfolgt und somit die oben genannten, Ressourcenkonsumierenden Schritte zur Instanziierung von Datenobjekten höherer struktureller Ordnung und ggf. auch eine Instanziierung einer entsprechenden Laufzeitumgebung bzw. Programmlogik zum Analysieren solcher Datenobjekte vermieden werden kann.

Nach Ausführungsformen umfasst das Verfahren die Speicherung der Datensätze in einer Datenbank, die durch ein Datenbankmanagementsystem (DBMS) verwaltet wird, wobei es sich bei dem DBMS um ein NoSQL-DBMS handelt.

Die Verwendung von NoSQL Datenbanken kann vorteilhaft sein, da diese Form des DBMS bezüglich der Hinzufügung und Verwaltung von Feldern besonders flexibel ist und somit zur Verwaltung heterogener Datensätze besonders geeignet ist.

Nach Ausführungsformen ist die Tokenisierungslogik ein generischer Tokenisierer, der zur Tokenisierung von Feldwerten von Feldern unterschiedlicher Feldtypen ausgebildet ist. Die Anwendung der generischen Tokenisierungslogik auf einen Feldwert umfasst ein Erkennen von Daten unterschiedlichen Datentyps innerhalb des Feldwertes, wobei die Daten unterschiedlichen Datentyps Textdaten sowie Bilddaten und/oder Audiodaten und/oder Videodaten umfassen.

Nach Ausführungsformen ist die Tokenmenge als durchsuchbarer Index ausgebildet. Alternativ dazu kann die Tokenmenge auch als solches gespeichert sein, z.B. als Bitsequenzliste, und zur Erzeugung des durchsuchbaren Index verwendet werden. Der Ort der Speicherung der Token in der Struktur des Index erfolgt dabei unabhängig davon, von welchem der Feldtypen die Token stammen. Die Generierung eines einzigen Index ("Gesamtindex") aus den Token mehrerer Felder hat den Vorteil, dass dieser zur schnellen Bearbeitung von Datenbankabfragen verwendet werden kann. In einem weiteren vorteilhaften Aspekt ist dieser Index auch deutlich kleiner als dies der Fall wäre, würde man einen Index für jeden Feldtyp separat anlegen, zumindest dann wenn einige Token in Feldern unterschiedlichen Typs vorkommen. Vorzugsweise wird jedoch aus jeder der Token-Teilmengen ein eigener Teilindex erstellt und ein geeigneter Teilindex zur Beantwortung einer Datenbankabfrage dynamisch erkannt und anstatt des Gesamtindex verwendet. Der Ort der Speicherung der Token in der Struktur jedes der Teilindizes erfolgt ebenfalls unabhängig davon, von welchem der Feldtypen die Token stammen.

Nach Ausführungsformen hat der Index (Gesamtindex) und/oder jeder der Teilindizes die Struktur eines Baums, insbesondere eines B+ Baums. Diese Struktur kann die notwendige Zeit zur Identifikation eines bestimmten indizierten Token, das identisch zu einem Suchwert ist, erheblich beschleunigen.

Nach Ausführungsformen speichert der (Gesamt)Index sämtliche aus den Feldwerten der Datensätze einer Datenbank erzeugten Token so, dass der Index jedes Token nur einmal enthält. Jedes Token beinhaltet Zeiger auf ein oder mehrere der Datensätze, aus deren Feldwerten es erzeugt wurde. Auch jeder der Teilindizes ist eine Menge an nur einmal in diesem Teilindex vorkommenden Token.

Nach Ausführungsformen sind die in dem Index und/oder jedem der Teilindizes gespeicherten Token frei von Referenzen auf Felder oder Feldtypen, die zur Speicherung von Feldwerten verwendet wurden, die zur Erzeugung der Token dienten.

Die hier für verschiedene Ausführungsformen beschriebenen Verfahren können z.B. als Software, Firmware und/oder Hardware implementiert sein. Vorzugsweise sind sie in Form von ein oder mehreren Softwareprogrammen oder Modulen implementiert, die auf einem monolithischen oder verteilten Computersystem ausgeführt werden. Beispielsweise kann der Tokenisierungsschritt von einem Tokenisierungsprogramm und der Klassifizierungsschritt von einem Klassifikationsprogramm durchgeführt werden. Es ist jedoch auch möglich, dass Tokenisierung und Klassifizierung durch dasselbe Softwareprogramm durchgeführt werden.

Nach Ausführungsformen umfasst das Verfahren den Empfang einer Suchanfrage, die einen Suchwert enthält. Als Antwort auf die Suchanfrage wird ein Gesamtindex oder, vorzugsweise nur ein Teilindex nach dem Suchwert durchsucht und ein indiziertes Token in dem durchsuchten Index identifiziert, das identisch ist zu dem Suchwert. Das Verfahren umfasst eine Analyse von Datensatz-Zeigern, die in dem durchsuchten Gesamtindex bzw. Teilindex mit dem identifizierten Token verknüpft gespeichert sind, um ein oder mehrere der Datensätze zu identifizieren, welche ein oder mehrere Feldwerte beinhalten, aus welchen das indizierte Token erzeugt wurde. Die ein oder mehreren identifizierten Datensätze oder einer Referenz auf die ein oder mehreren identifizierten Datensätze werden als Antwort auf die Suchanfrage an den anfragenden Client zurückgegeben.

Nach Ausführungsformen sind die Datensätze in verschlüsselter Form in der Datenbank gespeichert. Die Datensätze werden aber zusätzlich einzeln verschlüsselt und in einzeln verschlüsselter Form gespeichert, z.B. auf einem Client-Computer, der die Datenbank beinhaltet oder Zugriff auf diese hat. Die Datensätze sind so verschlüsselt, dass ein Server-Computersystem, auf dem die verschlüsselten Daten später gespeichert werden, diese nicht entschlüsseln kann. Die unverschlüsselten Datensätze, die jeweils aus ein oder mehreren Feldwerten bestehen, werden wie beschrieben tokenisiert, klassifiziert und in Teil-Tokenmengen und Teilindices gespeichert. Tokenisierung, Klassifizierung und Teilindex-Generierung kann ebenfalls auf dem Client-Computersystem erfolgen. Die Teilindices werden nun mit einem öffentlichen Schlüssel eines Server-Computersystems verschlüsselt und an das Servercomputersystem zusammen mit den verschlüsselten Datensätzen an das Server-Computersystem übertragen. Das Server-Computersystem entschlüsselt die Teil-Indizes mit seinem privaten Schlüssel, der zusammen mit dem öffentlichen Schlüssel des Server-Computersystems ein asymmetrisches kryptographisches Schlüsselpaar bildet. Das Server-Computersystem empfängt und speichert die Datensätze in verschlüsselter Form ohne diese entschlüsseln zu können. Das Server-Computersystem kann z.B. ein verteiltes Computersystem eines Cloudspeicherdienstes sein.

Das Server-Computersystem kann nun eine Suchanfrage dieses oder eines anderen Client-Computersystems, die einen Suchwert beinhaltet, empfangen, einen der Teil-Indizes identifizieren, der den Suchwert voraussichtlich enthält, und den identifizierten Index durchsuchen. Das Server-Computersystem gibt sodann ein oder mehrere verschlüsselte Datensätze, die in der Teilindex-Suche ermittelt wurden, an den Client zurück, von welchem die Suchanfrage stammt. Dies kann vorteilhaft sein, da es somit möglich ist, auch sensible Daten auf einem Cloudspeicherdienst (Server-Computersystem) zu speichern, dem nicht vertraut wird, wobei die Daten in einem Index durchsuchbar sind, ohne dass diese sensiblen Daten dem Cloudspeicherdienst bekannt werden können: in dem Index ist keine Information darüber enthalten, von welchem Feld die einzelnen Token stammen und es ist somit nicht bekannt, ob ein bestimmtes Token, z.B. eine Zahl, eine Ausweisnummer, ein Zertifikat, ein Datum oder ein Messwert ist. Zwar referenzieren die Token auf die Datensätze, diese liegen jedoch verschlüsselt vor sodass der Cloudspeicherdienst nicht auf den Inhalt der Datensätze zugreifen kann.

Nach Ausführungsformen werden die Datensätze durch ein Client-Computersystem jeweils einzeln so verschlüsselt, dass das Client- Computersystem diese wieder entschlüsselt kann, nicht jedoch ein Server- Computersystem, das zum Empfang der verschlüsselten Datensätze bestimmt ist.

Nach Ausführungsformen stellt das Server-Computersystem eine Schnittstelle bereit um das Client- Computersystem oder anderen Computersystemen einen Zugriff auf den entschlüsselten Teilindex zu ermöglichen. Die Schnittstelle kann eine Index-Auswahl ("Selektor")-Funktionalität beinhalten. Als Antwort auf den Empfang der Suchanfrage ermittelt die Schnittstelle denjenigen der Teilindexes, dessen Token im Hinblick auf Bitsequenz und/oder Bitsequenzlänge dem Suchwert am ähnlichsten sind, und durchsucht den ermittelten unverschlüsselten Teilindex nach dem Suchwert. Schließlich gibt das Server-Computersystem ein oder mehrere anhand der Indexsuche identifizierte, verschlüsselte Datensätze über ein Netzwerk, z.B. das Internet, an das Computersystem, von welchem die Anfrage stammt, zurück. Das Computersystem, das die verschlüsselten Datensätze empfängt, hat vorzugsweise einen geeigneten Schlüssel, um diese Datensätze wieder zu entschlüsseln.

In einem weiteren Aspekt betrifft die Erfindung ein Computersystem zur Datenklassifikation. Das Computersystem umfasst ein oder mehrere Prozessoren, ein Datenspeichermedium (das auch in Form mehrerer operativ verbundener Speichermedien ausgebildet sein kann) und ein DBMS, das dazu konfiguriert ist, Datensätze jeweils als eine Menge aus mehreren Feldwerten in den ein oder mehreren Datenspeichermedien zu speichern. Die Feldwerte werden jeweils in einem Feld gespeichert. Die Felder jedes der Datensätze gehören mindestens zwei unterschiedlichen Feldtypen an. Außerdem umfasst das Computersystem eine Programmlogik, die zur Erstellung einer Tokenmenge konfiguriert ist. Die Tokenmenge beinhaltet Token, die aus mehreren Feldwerten mehrerer der Datensätze durch Tokenisierung erzeugt wurden. Die Token entstammen Feldwerten von mindestens zwei unterschiedlichen Feldtypen und sind in Form einer Bitsequenz in dem Speichermedium gespeichert. Außerdem umfasst das Computersystem eine Klassifikationslogik, die zur Analyse von einem oder mehreren Merkmalen der Token auf der Ebene der Bitsequenz ausgebildet ist, um Teilmengen merkmalsähnlicher Token zu identifizieren. Die Merkmale umfassen die Länge der Bitsequenz der Token. Die Klassifizierungslogik ist ferner dazu ausgebildet, eine Kopie jeder der Teilmengen merkmalsähnlicher Token in nach Teilmengen getrennter Form in dem Datenspeichermedium zu speichern, wobei jede Teilmengenkopie jeweils eine Klasse merkmalsähnlicher Daten repräsentiert.

Unter einem "**Datenbankmanagementsystem"** oder "**DBMS"** wird im Folgenden ein elektronisches System zur Speicherung und Wiedergewinnung von Daten verstanden. Vorzugsweise werden die Daten in dem DBMS widerspruchsfrei und dauerhaft gespeichert und verschieden Anwendungsprogrammen und Nutzern in bedarfsgerechter Form effizient zur Verfügung gestellt. Ein DBMS kann typischerweise ein oder mehrere Datenbanken beinhalten und die darin enthaltenen Datensätze verwalten. Bei dem DBMS handelt es sich vorzugsweise um ein feldorientiertes DBMS, also um ein DBMS, das dazu konfiguriert ist, Teile einzelner Datensätze, sogenannte "Feldwerte", in mehrere unterschiedliche Felder zu speichern.

Unter einem **"Datensatz"** wird im Folgenden eine inhaltlich zusammenhängende und gemeinsam von einem Datenbankmanagementsystem verwaltete Menge an Daten verstanden. Ein Datensatz stellt typischerweise die kleinste strukturelle Einheit des Datenbestandes einer bestimmten Datenbank dar. Beispielsweise kann ein einzelner Datensatz ein bestimmtes physisches Objekt, z.B. eine natürliche Person, repräsentieren. Bei der Person kann es sich z.B. um einen Angestellten, einen Patienten, einen Kunden, etc. handeln. Der entsprechende Datensatz kann eine vordefinierte Menge von Attributwerten dieser Person beinhalten (z.B. Name oder Pseudonym, Alter, Größe, Gewicht, Geburtsdatum, Ausweisnummern, Sicherheitszertifikate, Authentifizierungscodes, biometrische Daten und andere).

Beispielsweise kann ein Datensatz eine Gruppe von inhaltlich zusammenhängenden (zu einem Objekt gehörenden) Datenfeldern repräsentieren, z. B. Artikelnummer, Artikelgröße, Artikelfarbe, Artikelname oder ähnliches. Die Feldtypen ,Name', .Adresse' und Geburtsdatum' könnten z.B. die logische Struktur eines Datensatzes zum Objekttyp "Person" bilden. Datensätze entsprechen einer logischen Struktur, die bei der Entwicklung der Datenbank festgelegt wurde und in manchen Ausführungsformen auch noch zur Laufzeit der Datenbank verändert werden kann, z.B. durch Hinzufügen, Entfernen oder Umbenennen von Feldern. In der Datenverarbeitung werden Daten zu Datensätzen zusammengefasst und in Datenbanken gespeichert, sie sind Gegenstand der Verarbeitung von Computerprogrammen und werden von diesen erzeugt, gelesen, verändert und gelöscht.

Obwohl Daten eigentlich immer als Aneinanderreihung mehrerer Datenelemente auftreten, sollen hier nicht alle Erscheinungsformen von Daten einen 'Datensatz' darstellen, sondern nur Datengruppierungen, die zu einem bestimmten Objekt gehören und in Feldern organisiert sind, welche von einem DBMS gemeinsam verwaltet werden, wobei das DBMS dazu ausgebildet ist, die Datenfelder mittels vordefinierter Befehle anzulegen, zu löschen und/oder umzubenennen und ggf. auch in das Zugriffsrechtsmanagement des DBMS einzubinden. Nicht als Datensätze in diesem Sinn gelten demnach zum Beispiel: Fließtexte, Drucker- oder Video-Datenströme, Inhalte von ausführbaren Dateien, Fotodaten oder die Daten von Grafiksoftware u. a. Diese Daten können aber in einem Feld eines Datensatzes gespeichert sein.

Unter einem **"Feld"** wird im Folgenden ein Bereich auf einem logischen oder physikalischem Datenträger bezeichnet, der von einem DBMS verwaltet wird, der einem vordefinierten Feldtyp zugeordnet ist und der zur Speicherung eines Feldwertes eines Datensatzes angelegt und bestimmt ist. Eine "Feld" ist also ein Element zur Speicherung eines Feldwertes eines Datensatzes gemäß obiger Definition. Felder eines Datensatzes werden von einem DBMS gemeinsam verwaltet. Das Feld kann von dem DBMS mittels vordefinierter Befehle angelegt, gelöscht oder umbenannt und ggf. auch in das Zugriffsrechtsmanagement des DBMS einbezogen werden.

Ein **"Feldtyp"** ist eine Kategorie bzw. ein Typ, dem ein bestimmtes Feld angehört. Beispielsweise kann ein Feldtyp ein bestimmtes Attribut eines physischen Objektes repräsentieren. Beispielsweise kann ein DBMS zur Speicherung von Datensätzen, die Attribute von Angestellten enthalten, Feldtypen wie "Name", "Pseudonym", "Ausweisnummer"; "Zugriffszertifikat für Raum R", "Zugriffszertifikat für Gerät G", "Zugriffszertifikat für Gebäude GB", "Alter" verwenden. Jedes Feld ist dabei genau einem Feldtyp zugeordnet. Vorzugsweise darf jeder Datensatz maximal nur ein Feld für jeden im DBMS vordefinierten Feldtyp enthalten.

Ein "**Feldwert**" ist ein Datenwert, der Bestandteil eines Datensatzes ist und der zur Speicherung in einem Feld eines bestimmten Feldtyps bestimmt ist. Beispielsweise kann ein Feldwert des Datensatzes für einen bestimmten Angestellten "Max Mustermann" einen ersten Feldwert "Max Mustermann" für den Feldtyp "Name", einen weiteren Feldwert "13425298833" für den Feldtyp "Ausweisnummer", einen weiteren Feldwert "237971113" für den Feldtyp "Zugriffszertifikat für Raum R" beinhalten. Ein Feldwert kann aus einem einzigen Wort, einer einzigen Zahl, oder einer Kombination aus mehreren Wörtern und/oder Zahlen und/oder anderen Datenformaten bestehen, wobei verschiedene Ausführungsformen der Erfindung verschiedene Grade an Flexibilität im Hinblick auf die Art und Kombinierbarkeit von Datentypen innerhalb des gleichen Feldwertes umfassen.

Im Falle einer klassischen SQL-basierten Datenbank würde ein Feldtyp also einer Spalte einer Tabelle entsprechen, z.B. einer Spalte für "Alter" in einer "Angestelltentabelle". Jede Zeile in der Angestelltentabelle würde einem Datensatz entsprechen, welcher Attributwerte eines bestimmten Angestellten beinhaltet. Jede "Zelle" dieser Zeile entspricht einem Feld und dient der Speicherung eines Feldwertes (also eines einfachen oder zusammengesetzten Attributwerts des Angestellten). Ein Feld entspricht also dem Speicherbereich, in welchem ein bestimmter Datenwert/Feldwert eines Datensatzes gespeichert wird.

Unter einer **"Datenbank"** wird im Folgenden eine (typischerweise große) Menge von Daten verstanden, die in einem Computersystem von einem DBMS nach bestimmten Kriterien verwaltet wird. Die Daten sind dabei in einer Vielzahl von Datensätzen organisiert.

Ein **"NoSQL"** (englisch für Not only SQL) DBMS ist ein DBMS, das einem nichtrelationalen Ansatz der Datenspeicherung folgt und keine festgelegten Tabellenschemata benötigt. Zu den NoSQL DBMSs gehören insbesondere dokumentenorientierte DBMSs wie Apache Jackrabbit, BaseX, CouchDB, IBM Notes, MongoDB, Graphdatenbanken wie Neo4j, OrientDB, InfoGrid, HyperGraphDB, Core Data, DEX, AllegroGraph, und 4store, verteilte ACID- DBMSs wie MySQL Cluster, Key-Value-Datenbanken wie Chordless, Google BigTable, GT.M, InterSystems Caché, Membase, Redis, Sortierte Key-Value-Speicher, Multivalue-Datenbanken, Objektdatenbanken wie Db4o, ZODB, spaltenorientierte Datenbanken und temporale Datenbanken wie Cortex DB.

Unter einem **"Zertifikat"** wird hier im Folgenden ein digitales Zertifikat verstanden. Ein Zertifikat ist ein digitaler Datensatz, der bestimmte Eigenschaften von Nutzern oder anderen Objekten bestätigt und dessen Authentizität und Integrität durch kryptografische Verfahren geprüft werden kann. Das digitale Zertifikat enthält die zu seiner Prüfung erforderlichen Daten entweder selbst oder ist mit zertifikatsbezogenen Metadaten verknüpft gespeichert, sodass die zu seiner Prüfung erforderlichen Daten aus den Metadaten bezogen werden können. Die Ausstellung des Zertifikats erfolgt vorzugsweise durch eine offizielle Zertifizierungsstelle, die Certification Authority (CA). Beispielsweise kann das Zertifikat als Zahlenwert ausgebildet sein, welchem Metadaten zugeordnet sind. Die Verwendung von Zahlwerten kann vorteilhaft sein, da diese sich gut indexieren lassen sich und im Falle einer notwendigen Modifikation der Metadaten (z.B. Verlängerung der Validität) unverändert bleiben, also auch ihre Position innerhalb des Index beibehalten können. Vorzugsweise sind die Zertifikate also als Zahlwerte ausgebildet die keinen öffentlichen Schlüssel beinhalten, sondern mit Metadaten oder einem Public-Key-Zertifikat verknüpft gespeichert sind, wobei die Metadaten den Geltungsbereich bzw. Gültigkeitsdauer des Zertifikats näher festlegen. Alternativ dazu kann ein Zertifikat auch nach dem Standard X.509 ausgebildet sein, also einen öffentlichen Schlüssel beinhalten und die Identität des Inhabers und weitere Eigenschaften eines öffentlichen kryptographischen Schlüssels des Zertifikats bestätigen. Ein Zertifikat kann sich, muss sich aber nicht notwendigerweise auf einen kryptographischen Schlüssel beziehen, sondern allgemein Daten zur Prüfung einer elektronischen Signatur enthalten oder mit diesen verknüpft gespeichert sein.

Ein **"Tokenisierer"** ist eine Programlogik, die Daten, zum Beispiel einen Feldwert, als Input erhält, die Daten analysiert, z.B. um Delimiter oder andere Zerlegungskriterien und Muster zu erkennen und die Daten dann in ein oder mehrere Token als Ergebnis der Analyse zerlegt und die Token zurückgibt. Es ist auch möglich das nicht alle Token zurückgegeben werden konnte. Beispielsweise kann ein Volltextindizierer semantisch unbedeutende Stoppwörter erkennen und herausfiltern, sodass diese nicht indiziert werden. Einen Datenwert zu "tokenisieren" bedeutet also, den Datenwert nach einem bestimmten Schema in mehrere Bestandteile zu zerteilen. Die Bestandteile stellen die Token dar. So können z.B. natürlichsprachliche Texte an vordefinierten Trennzeichen, z.B. Leerzeichen, Punkten oder Kommata, aufgeteilt werden, die so generierten Bestandteile (Wörter) werden als Token verwendet. Es ist möglich dass manche Token nicht für die Indizierung verwendet werden (z.B. Stopwörter) oder die Token vor der Indizierung zusätzlich verarbeitet werden (z.B. Reduzierung von Wörtern auf den Wortstamm). In diesem Fall erfolgt vorzugsweise eine gleichartige Verarbeitung des Suchwerts durch das Client-Computersystem oder das Server-Computersystem um sicherzustellen, dass die Suchwerte der Suchanfragen den in dem Index enthaltenen Token entsprechen. Beispielsweise kann es sich bei den Delimitern um vordefinierte Bitmuster handeln.

Ein **"Index"** ist eine Datenstruktur, die die Suche nach bestimmten Datenwerten durch ein Datenbankmanagementsystem beschleunigt. Ein Index besteht aus einer Ansammlung von Zeigern (Verweisen), die eine Ordnungsrelation auf mehrere (in dem Index gespeicherte - "indizierte" - Datenwerte definieren. Beispielsweise werden hierfür B+-Bäume verwendet. Jeder indizierte Datenwert ist mit weiteren Zeigern verknüpft, die auf Datensätze verweisen, in welchen der gefundene indizierte Datenwert enthalten ist und die die Datenbasis für die Erstellung des Index darstellten. Datenbankmanagementsysteme verwenden Indices um als Antwort auf eine Suchanfrage die gewünschten Datensätze schnell zu identifizieren, indem zunächst der Index entlang der Zeiger nach einem Datenwert durchsucht wird welcher identisch zu einem in der Suchanfrage enthaltenen Referenzwert ist. Ohne Index müssten die von dem DBMS verwalteten Datenwerte eines Feldes sequenziell durchsucht werden, während eine Suche mit Hilfe des Index, z.B. eines B+ Baums, oft nur logarithmische Komplexität hat.

Ein "**Dekodieralgorithmus**" ist eine Programmlogik zur Kryptoanalyse, also eines Datenanalyseverfahrens, welches Informationen aus verschlüsselten Daten gewinnt, wobei der Verschlüsselungsalgorithmus und/oder der Verschlüsselungsschlüssel zunächst unbekannt sind und erst durch das Verfahren ermittelt oder die Verschlüsselungsmechanismen anderweitig umgangen ("gebrochen") werden.

Ein "**Klassifizierer"** oder eine "Klassifikationslogik" ist eine Programmlogik zum automatischen Zusammenfassen von Objekten zu Klassen (Gruppen, Mengen), deren Elemente untereinander im Hinblick auf ein oder mehrere Merkmale sich ähnlicher sind als den Objekten anderer Klassen.

Die Verwendung von Ordinalzahlen wie erstes, zweites, drittes etc. dient hier allein der Unterscheidung von Elementen und/oder Personen mit ansonsten gleicher Bezeichnung und soll keine bestimmte Reihenfolge implizieren. Ferner kann es sich bei Elemente und/oder Personen, deren Bezeichnung sich allein durch eine Ordinalzahl unterscheidet, soweit sich aus dem konkreten Zusammenhang nicht eindeutig etwas anderes ergibt, um identische oder voneinander verschiedene Elemente bzw. Personen handeln.

### Kurzbeschreibung der Figuren

Ein exemplarisches Verfahren zur Erstellung eines Index sowie ein entsprechendes System sind in den anhängenden Zeichnungen 1 bis 5 veranschaulicht. Darin zeigen:
- Figur 1: ein Blockdiagramm einer Ausführungsform eines erfindungsgemäßen Computersystems.
- Figur 2: die in verschiedenen Feldern zweier Datensätze gespeicherten Feldwerte sowie die aus diesen erzeugte Tokenmenge.
- Figur 3: ein Flussdiagramm zur Erzeugung eines Gesamtindex aus allen Token.
- Figur 4: ein verteiltes Computersystem, das ein Server-Computersystem und mehrere Client-Computersysteme umfasst.
- Figur 5: weitere Details des Server-Computersystems und eines der Client-Computersysteme.
- Figur 6: ein Flussdiagramm eines Verfahrens zur Datenklassifikation gemäß einer Ausführungsform.

### Ausführliche Beschreibung

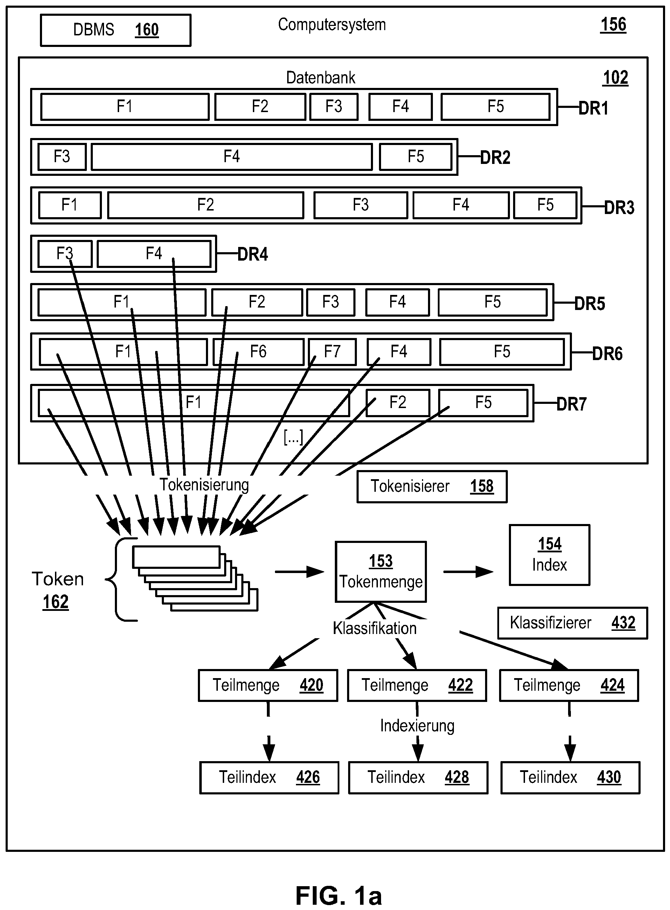

**Figur 1a** zeigt ein Blockdiagramm einer Ausführungsform eines erfindungsgemäßen Systems zur Klassifizierung von Daten.

Ein Datenbankmanagementsystem, zum Beispiel ein noSQL DBMS 160, wird auf einem Computersystem 156 instanziiert. Das DBMS 160 verwaltet eine oder mehrere Datenbanken. Die hier abgebildete Datenbank 102 umfasst eine Vielzahl von Datensätzen DR1, DR2, ..., DR7, ..., welche jeweils ein oder mehrere Feldwerte beinhalten. Jeder der Feldwerte eines Datensatzes ist in einem entsprechenden Feld, einer Art Datencontainer, gespeichert. Jedes Feld ist dabei einem bestimmten Feldtyp F1, F2, F3, F4, F5, F6, F7 zugewiesen. Beispielsweise ist das erste Feld von Datensatz DR1 dem Feldtyp F1 zugewiesen, das zweite Feld von Datensatz DR1 dem Feldtyp F2 usw. In analoger Weise ist das erste Feld von Datensatz DR6 dem Feldtyp F1 zugewiesen, das zweite Feld von Datensatz DR6 dem Feldtyp F6 usw. Die Zusammensetzung der Feldwerte der einzelnen Datensätze kann sich dabei im Hinblick auf deren Feldtypen unterscheiden, wie anhand der Datensätze in der Datenbank 102 ersichtlich ist. Es ist auch möglich, dass einzelne Datensätze gar keinen Feldwert eines bestimmten Feldtyps beinhalten. In anderen Ausführungsformen (hier nicht gezeigt) können auch mandatorische Feldtypen definiert sein, d.h., dass jeder Datensatz ein Feld für jeden mandatorischen Feldtyp beinhaltet und optional ein oder mehrere weitere Felder für optionale Feldtypen beinhaltet.

Zudem ist auf dem Computersystem 156 eine Tokenisierungsapplikation ("Tokenisierer", "Tokenisierungslogik") 158 und eine Klassifizierungsapplikation ("Klassifizierer", "Klassifizierungslogik") 432 instanziiert. Der Tokenisierer zerlegt die Datenwerte mehrerer Felder von mehreren Datensätzen zu einer gemeinsamen Gesamt-Tokenmenge 162, die optional noch weiterverarbeitet werden kann, z.B. in eine nicht-redundante Tokenmenge 153 umgewandelt werden kann.

Die Programmlogik zur Generierung des Index umfasst einen oder mehrere Tokenisierer 158, die dazu ausgebildet sind, die Feldwerte von ein oder mehreren Feldern zu tokenisieren. Optional können auch Feldwerte ein oder mehrerer Felder zusätzlich als Ganzes ausgelesen und ohne eine Zerlegung als Token verwendet werden.

Der Klassifizierer 432 kann z.B. als "supervised" Klassifizierer ausgebildet sein, bei welchem die Anzahl der zu erwartenden Klassen vorgegeben ist. Beispielsweise kann der Klassifizierer ein regelbasierter Klassifizierer sein, der einen Satz vordefinierter binärer Muster mit den Token abgleicht, oder ein k-means Klassifikationsalgorithmus. Alternativ dazu kann es sich bei dem Klassifizierer auch um einen "nonsupervised" Klassifizierer handeln. Beispielsweise können neuronale Netze und ähnliche Algorithmen verwendet werden.

Der Tokenisierer 158 oder eine zusätzliche Programmlogik ("Indexierer") ist dazu ausgebildet, einen Gesamtindex 154 aus den Token 153 zu erzeugen. Zusätzlich oder alternativ dazu ist der Tokenisierer oder der Indexierer dazu ausgebildet, einen Teilindex 426, 428, 430 aus jeder der Token-Teilmengen 420, 422, 422 zu erzeugen. Vorzugsweise hängt die Position der Token innerhalb des Index bzw. innerhalb der Teilindixes nicht von dem Feldtyp ab von dem das Token stammt.

Nach alternativen Ausführungsformen wird die Programmlogik zur Tokenisierung und/oder zur Generierung des Index bzw. der Teilindizes und/oder zur Klassifikation der Token in Form eines Plug-ins oder Add-ons des DBMS bereitgestellt. Dies kann vorteilhaft sein, da mithilfe eines zusätzlichen Softwaremoduls zur Tokenisierung und Tokenklassifikation bestehende Typen von DBMSs funktional erweitert werden können, sodass eine Migration der Daten zu einem anderen DBMS zum Zwecke der Tokengenerierung und Klassifikation nicht notwendig ist. Nach einer weiteren, hier nicht dargestellten alternativen Ausführungsform können Tokenisierung, Indexerzeugung und Tokenklassifikation je in Forme eines eigenständigen Applikationsprogramms implementiert sein.

Vorzugsweise werden sämtliche oder zumindest die meisten Feldwerte sämtlicher Datensätze einer Datenbank 102 tokenisiert, sodass eine große Menge an Token 153 entsteht. In Abhängigkeit von der Art der Daten in den einzelnen Feldwerten können die Token 153 eine Mischung aus Zahlen, Buchstabenwörtern, Bildern oder Bildsegmenten, Audiodateien oder Audioelementen oder sonstigen Datenstrukturen beinhalten. Jedes der erzeugten Token ist mit einem Zeiger verknüpft gespeichert, wobei der Zeiger auf den Datensatz verweist, ihm das Token entstammt, nicht jedoch auf ein einzelnes Feld bzw. einen Feldtyp verweist, in welchem der Feldwert gespeichert wurde aus welchem der Token abgeleitet wurde.

Vorzugsweise handelt es sich bei der Tokenmenge 153 um eine nicht-redundante, "unique" Token-Menge, in welcher jedes der Token nur ein einziges Mal vorkommt. D.h., auch wenn ein Token mit dem Wert "3467475675" mehrfach in der Datenbank 102 und damit auch in einer zunächst gebildeten Tokenmenge vorkommt, wird nur ein einziges Token mit dem Wert "3467475675" in der nicht-redundanten Token-Menge 153 und in dem Index 154 gespeichert. Allerdings erfolgt die Speicherung in dem Index 154 bzw. jedem der Teilindizes so, dass ein indiziertes Token auf sämtliche Datensätze DR1-DR7 verweist, in welchem es in zumindest einem Datenwert zumindest einmal enthalten ist. Vorzugsweise erfolgt die Speicherung aller Token der nicht-redundanten Tokenmenge in dem Index bzw. den Teilindizes so, dass die Token nach einem Sortierkriterium sortiert werden und in sortierter Form in der Indexstruktur gespeichert werden. Die Sortierung kann beispielsweise anhand des Alphabets für alphanumerische Daten oder sonstiger, an die Daten angepasste Sortierkriterien erfolgen. Da die Token in dem Index vorzugsweise in sortierter Form gespeichert sind, und weiterhin vorzugsweise in einer Baumstruktur gespeichert sind, ist es sehr schnell möglich, ein bestimmtes Token innerhalb des Index zu identifizieren und dann die Verweise dieses identifizierten Tokens auf ein oder mehrere Datensätze zu verwenden, um sehr schnell diejenigen Datensätze zu identifizieren, die ein bestimmtes, gesuchtes Token enthalten. Es ist also nicht erforderlich, die Datensätze der Datenbank 102 sequenziell zu durchsuchen.

Die Zahl und Zusammensetzung der Feldtypen einzelner Datensätze kann unterschiedlich sein. Die Teilindizes 426, 428, 430 leiten sich jeweils nicht von unterschiedlichen Tabellenspalten bzw. Feldtypen ab, sondern von Token-Teilmengen 420, 422, 424, die jeweils Token beinhalten, die eine ähnliche Bitsequenzlänge haben und/oder die ein oder mehrere ähnliche Bitsequenzmuster aufweisen. "Ähnliche Bitseqzuenzmuster" können z.B. identische Folgen von "0"en und "1"en sein, die in den Bitsequenzen mehrerer Token vorkommt und lediglich um einige Positionen relativ zur ersten Position der Bitsequenz des jeweiligen Token verschoben sind. Die Eingruppierung der Token der Tokenmenge 153 in Teilmengen ähnlicher Token wird von dem Klassifizierer 432 vorgenommen, der zur Klassifizierung der Token ausschließlich auf der Ebene der Bitsequenz arbeitet. Vorzugsweise arbeitet auch der Tokenisierer 158 ausschließlich auf der Bitsequenzebene der Feldwerte, um diese in Token 162 zu zerlegen. Das heißt, der Tokenisierer analysiert die einzelnen Bits der als Bitsequenz gespeicherten Feldwerte um darin Muster bekannter Bitfolgen zu erkennen, die z.B. den Übergang von einem Textabschnitt zu einem Bildabschnitt oder umgekehrt markieren, oder die das Ende eines Bildes und den Beginn eines weiteren Bildes, das als Teil des Feldwerts gespeichert ist, markieren. Somit kann auf höchst effiziente Weise die Tokenmenge 162 erstellt und klassifiziert und ggf. auch entsprechende Teilindices erzeugt werden, ohne Datenobjekte auf einer höheren strukturellen Ebene erzeugen und/oder Laufzeitumgebungen zur Verarbeitung derartiger höher organisierter Objekte instanziieren zu müssen. Die Token-Teilmengen bzw. die Teilindizes können für eine Vielzahl von Anwendungsszenarien verwendet werden.

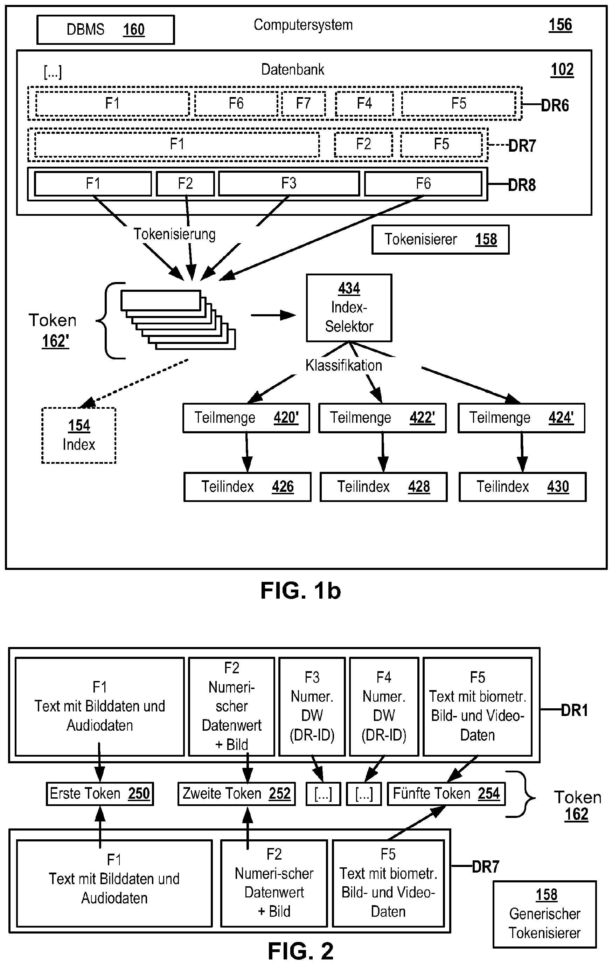

In einem Szenario, das in **Fig. 1b** gezeigt wird, wird eine als "Indexselektor" 434 bezeichnete Programmlogik bereitgestellt. Dies kann manuell, semi-manuell oder automatisch erfolgen. Der Indexselektor ist dazu ausgebildet, als Antwort auf den Empfang eines bestimmten Datenwertes einen der Teilindizes 426, 428, 430 auszuwählen nach der gleichen Auswahllogik, nach welcher auch der Klassifizierer 432 einzelne Token anhand ihrer Bitsequenzlänge oder anderer Bitsequenzbezogener Merkmale Token einzelnen Token-Teilmengen (aus denen die jeweiligen Teil-indizes gebildet wurden) zuwies. Das heißt, ein Datenwert, der aufgrund seiner Bitsequenz von dem Klassifizierer 432 der Teilmenge 422 zugewiesen würde, wird den Indexselektor 434 dazu veranlassen, den Teilindex 428 zu wählen, der aus der Teilmenge 422 hervorging. Ein Datenwert, der aufgrund seiner Bitsequenz von dem Klassifizierer 432 der Teilmenge 424 zugewiesen würde, wird den Indexselektor 434 dazu veranlassen, den Teilindex 430 zu wählen, der aus der Teilmenge 424 hervorging. Und so weiter.

Der Indexselektor sorgt dafür, dass als Antwort auf den Empfang einer "Schreibanfrage" an die Datenbank 102 der zu schreibende Datenwert nicht nur in der Datenbank gespeichert wird sondern auch in einem der Teilindizes, welche der Indexselektor anhand von Bitsequenzmerkmalen des zu schreibenden Datenwerts dynamisch identifiziert. Beispielsweise wurde gemäß Fig. 1b ein neuer Datensatz DR8 in der Datenbank gespeichert. Dessen Feldwerte DR8.F1, DR8.F2, DR8.F3 und DR8.F6 werden tokenisiert und mit Hilfe des Index-Selektors jeweils in demjenigen der Teilindizes gespeichert, welcher bereits Token enthält, die diesem neuen Token im Hinblick auf Bitsequenzmerkmale ähnlich sind.

In entsprechender Weise sorgt der Indexselektor dafür, dass als Antwort auf den Empfang einer "Leseanfrage" an die Datenbank 102 einer der Teilindizes, welche der Indexselektor anhand von Bitsequenzmerkmalen des zu lesenden Datenwerts dynamisch identifiziert, nach dem Suchwort durchsucht wird, um in effizienter Weise die Datensätze zu identifizieren, die das Suchwort beinhalten und diese Datensätze zurückzugeben. Weder beim Lesen noch beim Schreiben wird also auf einen Gesamtindex 154 zugegriffen, der die Gesamtheit aller Token der Datensätze enthält. Vielmehr kann dadurch, dass auf Teilindizes zurückgegriffen wird, deren Größe und/oder Inhalt vorzugsweise von der Art der Daten abhängt, der Arbeitsspeicherverbrauch reduziert werden.

**Figur 2** zeigt beispielhaft die in verschiedenen Feldern zweier Datensätze gespeicherten Feldwerte sowie die aus diesen erzeugten intermediären Tokenmengen. So kann beispielsweise der Feldtyp F1 zur Speicherung von Lebensläufen dienen. In Feldern des Feldtyps F1 werden somit häufig natürlich sprachliche Texte mit Bilddaten und optional auch Audiodaten gespeichert. Feldtyp F2 kann zur Speicherung eines Berechtigungsnachweises für ein bestimmtes Gebäude, zum Beispiel in Form eines numerischen Datenwerts, der als Zertifikat dient, ausgebildet sein. Es ist möglich dass auch die Daten für den Feldtyp F2 Bilddaten enthalten, z.B. ein Bild der Person das auf einem Ausweis angebracht ist. Die Feldtypen F3 und F4 können zur Speicherung numerischer Datenwerte, die je als Berechtigungsausweise für ein weiteres Gebäude (F3) oder einen bestimmten Raum (F4) dienen, ausgebildet sein. Der Feldtyp F5 kann der Speicherung biometrischer Daten dienen. Die biometrischen Daten können in Form von Texten, Bildern (zum Beispiel Fingerabdrücke, Irisbilder, etc.), und/oder Videodaten (Bewegungsmuster, etc.) in den Feldern des Feldtyps F5 gespeichert sein. Vorzugsweise haben die Felder der verschiedenen Feldtypen ein generisches Datenformat, das im Prinzip die Speicherung sämtlicher in der Datenbank vorkommender Datenformen (Text, Zahlen, Bilder, Video-, Audio und/oder sonstiger Dateien) zulässt. Es ist möglich, dass beispielsweise eine Applikationslogik, die die Daten erstellt, alle Daten eines bestimmten semantischen Konzepts (z.B. "Alter", "Geburtstag", "Zugangsberechtigung für Gebäude XY") in einem speziell hierfür spezifizierten Feld speichert, auch wenn das Feld auch die Speicherung anderer Datenformate unterstützen würde.

Vorzugsweise handelt es sich bei dem Tokenisierer um einen einzigen, generischen Tokenisierer, der auf sämtliche zu tokenisierenden Felder verschiedener Feldtypen angewandt wird. Der Tokenisierer 158 generiert aus dem im ersten Feld des Datensatzes DR1 gespeicherten Feldwert und aus dem im ersten Feld des Datensatzes DR7 gespeicherten Feldwert sowie aus den Feldwerten aller Felder der anderen Datensätze, die dem Feldtyp F1 zugeordnet sind, eine Mengen an ersten Token 250. Der Tokenisierer 158 generiert zudem aus dem im zweiten Feld des Datensatzes DR1 gespeicherten Feldwert und aus dem im zweiten Feld des Datensatzes DR7 gespeicherten Feldwert sowie aus den Feldwerten aller Feldern der anderen Datensätze, die dem Feldtyp F2 zugeordnet sind, eine Mengen an zweiten Token 252. Dies wird für die Feldwerte sämtlicher Feldtypen F1-F7 durchgeführt, wobei vorzugsweise der gleiche generische Tokenisierer für alle Feldtypen verwendet wird. Die Gesamtheit der für alle Feldtypen generierten Token 250, 252, ..., 254 bildet die Tokenmenge 162. Vorzugsweise wir die Tokenmenge 162 als nicht-redundante Tokenmenge 153 gespeichert.

Beispielsweise können schon im Zuge der Speicherung von Datenwerten in den Einzelnen Feldern von der die Daten speichernden Programmlogik (z.B. ein Applikationsprogramm oder das DBMS, das die Datenbank verwaltet) vordefinierte Bitmuster so in die Datenwerte eingeführt werden, dass anhand dieser Bitmuster Daten unterschiedlichen Typs (Textdaten, einzelne Wörter, Datumsangaben, Zahlenwerte, Audiodaten) voneinander durch einen Tokenisierer leicht voneinander abgrenzbar sind. Die hierfür verwendete Programmlogik kann je nach Anwendungsgebiet beliebig komplex sein und z.B. einem Bildanalyseschritt nachgeschaltet sein um dann einzelne in einem Bild erkannte Objekte so zu speichern, dass sie von einer eindeutigen, objekttypspezifischen Bitsequenz von anderen Nutzdaten abgrenzbar sind. Nach anderen Ausführungsformen erfolgt jedoch keine explizite Einführung von Bitmuster-Delimitern im Zuge der Speicherung der Datensätze in der Datenbank. Beispielsweise können manche Datentypen, wenn sie vom DBMS als Bestandteil komplexerer, zusammengesetzter Dateneinträge (Text, Bilder, Zahlen und/oder Ton) bereits auf der Bitebene wiederkehrende Bitmuster enthalten, die eine Tokenisierung einiger oder aller in einem Feld gespeicherten Werte in ein, zwei, oder mehrere Token erlauben. Auch machine-learning Ansätze, die testweise verschiedene, zufällig gewählte Delimiter zur Tokenisierung anwenden und dann diejenigen Delimiter beibehalten und als Grundlage bei der Tokenisierung bei der Erstellung der Teilindizes verwenden, die zu einem gewünschten Grad an Tokenisierung der in der Datenbank gespeicherten Datenwerte führen, ist möglich.

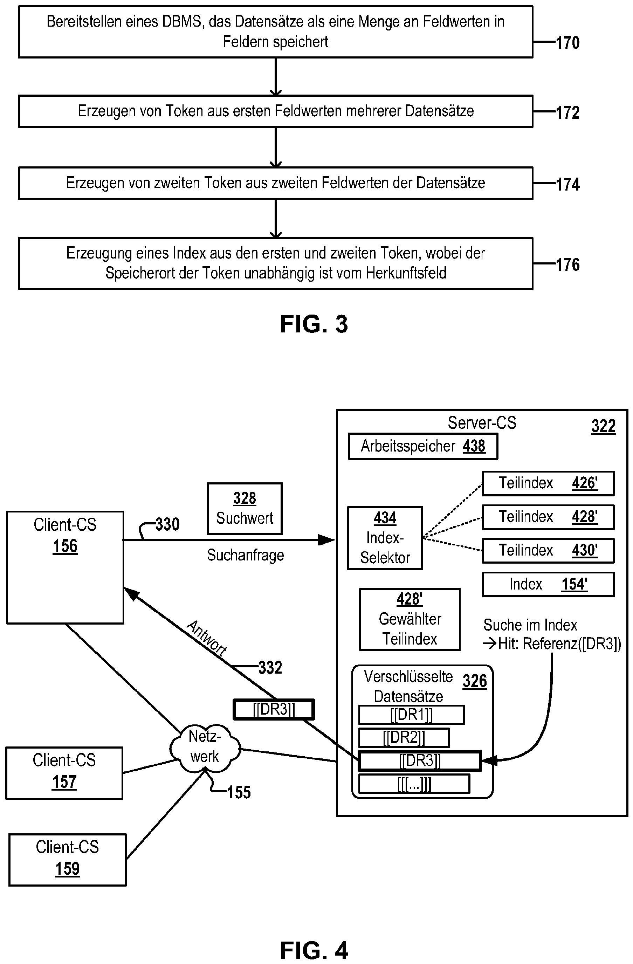

**Figur 3** zeigt ein Flussdiagramm zur Erzeugung eines Gesamtindex 154 aus der Gesamtheit der Tokenmenge 153 gemäß einer Ausführungsform. Zunächst erfolgt eine Bereitstellung 170 eines DBMS 160, zum Beispiel eine Instanziierung des DBMS auf einem Computersystem 156. Das DBMS 156 ist dazu konfiguriert, Datensätze DR1-DR7 jeweils als eine Menge aus mehreren Feldwerten strukturiert zu speichern. Dabei wird jeder der Feldwerte jeweils in einem eigenen Feld gespeichert. Die Felder jedes der Datensätze gehören mindestens zwei unterschiedlichen Feldtypen F1-F7 an. In Schritt 172 erfolgt die Erzeugung von ersten Token 250 aus ersten Feldwerten mehrerer Datensätze. Wie in Figur 2 beispielhaft gezeigt, sind die ersten Feldwerte in ersten Feldern gespeichert. Die ersten Felder gehören einem ersten Feldtyp F1 an. In Schritt 174 erfolgt die Erzeugung von zweiten Token 252 aus zweiten Feldwerten mehrerer Datensätze. Wie in Figur 2 beispielhaft gezeigt, sind die zweiten Feldwerte in zweiten Feldern gespeichert. Die zweiten Felder gehören einem zweiten Feldtyp F2 an. In analoger Weise wird Schritt 172 bzw. 174 wiederholt für die Felder bzw. Feldwerte weiterer Feldtypen F3, ..., F7. Schließlich erzeugt eine Tokenisierungslogik (zum Beispiel ein generische Tokenisierer 158) in Schritt 176 einen durchsuchbaren Index 154 aus zumindest den ersten Token 250 und den zweiten Token 252 und gegebenenfalls den weiteren für andere Datentypen erzeugten Token 254. Der Ort der Speicherung der ersten und zweiten und der gegebenenfalls weiteren Token 254 in der Struktur des Index erfolgt unabhängig davon, von welchem der Felder die Token stammen. Anstatt oder zusätzlich zu dem Gesamtindex 154 kann aus jeder der Token-Teilmengen 420, 422, 424 auch ein Teilindex in analoger Weise erzeugt werden.

**Figur 4** zeigt übersichtsartig ein verteiltes System, das ein Server-Computersystem 322 und mehrere Client-Computersysteme 156, 157, 159 umfasst. Die Computersysteme 322, 156, 157, 159 sind über ein Netzwerk 155, z.B. das Internet, miteinander verbunden.

Das Client-Computersystem 156 kann beispielsweise ein Client-Applikationsprogramm beinhalten, welches eine Suchanfrage 330 über das Netzwerk an das Server-Computersystem 322 sendet. Die Suchanfrage beinhaltet einen Suchwert 328, zum Beispiel ein Nutzer-Pseudonym in Form eines Zahlenwertes "3463744".

Das Server-Computersystem 322 kann als ein Cloud-Computersystem ausgebildet sein, welches selbst aus einer Vielzahl miteinander vernetzten und operativ aneinander gekoppelten Ressourcen, insbesondere mehreren Datenspeichergeräten und Prozessoren, besteht. Das Server-Computersystem stellt Datensätze einer Datenbank für eine Vielzahl von berechtigten Client-Computersystemen 156, 157, 159 über das Netzwerk bereit. Die Bereitstellung umfasst das Verfügbarmachen eines oder mehrerer Teilindizes 426', 428', 430' mittels eines Indexselektors 434. Jeder der Teilindizes ist aus Teiltokenmengen von Token gebildet, die sich im Hinblick auf Merkmale ihrer Bitsequenz ähneln und in Teiltokenmengen gruppiert wurden wie dies für Ausführungsformen hier beschrieben ist. Jeder der Teilindizes ermöglicht es den Client-Computersystemen, den Inhalt der Datenbank 326 zu durchsuchen sowie Treffer [[DR3]] zu identifizieren und zurückzugeben, obwohl die Datenbank 326 verschlüsselt ist. Die Verwendung von Teilindizes anstatt eines Gesamtindex 154' reduziert den Ressourcenverbrauch auf Seiten des Servers, insbesondere was den Verbrauch von Arbeitsspeicher angeht.

Die Speicherung von großen Datenbanken und die Bereitstellung eines entsprechenden Suchindex für eine Vielzahl von Client-Computersystemen stellen oftmals eine erhebliche Anforderung im Hinblick auf die Systemsicherheit, Ausfallsicherheit und Leistungsfähigkeit der Prozessoren und Speicherkomponenten dar. Eine Auslagerung dieser Dienste auf spezialisierte Cloud-Computersysteme ist daher gerade für viele mittelständische Unternehmen von hohem ökonomischen Interesse. Allerdings befinden sich die Daten, die auf Cloud-Rechnern gespeichert sind, oftmals im Ausland und/oder unter der Kontrolle eines Cloud-Dienstanbieters, dem nicht vollständig vertraut wird. Ausführungsformen der Erfindung ermöglichen also die Auslagerung und Speicherung von sensiblen Daten auf Cloud-Dienste in einer Weise, dass diese über einen Index durchsuchbar sind und an mehrere berechtigte Client-Computersysteme zur Verfügung gestellt werden können, ohne dass die Vertraulichkeit der in dem Cloud-Speicherdienst gespeicherten Daten (Datensätze und Index) gefährdet ist.

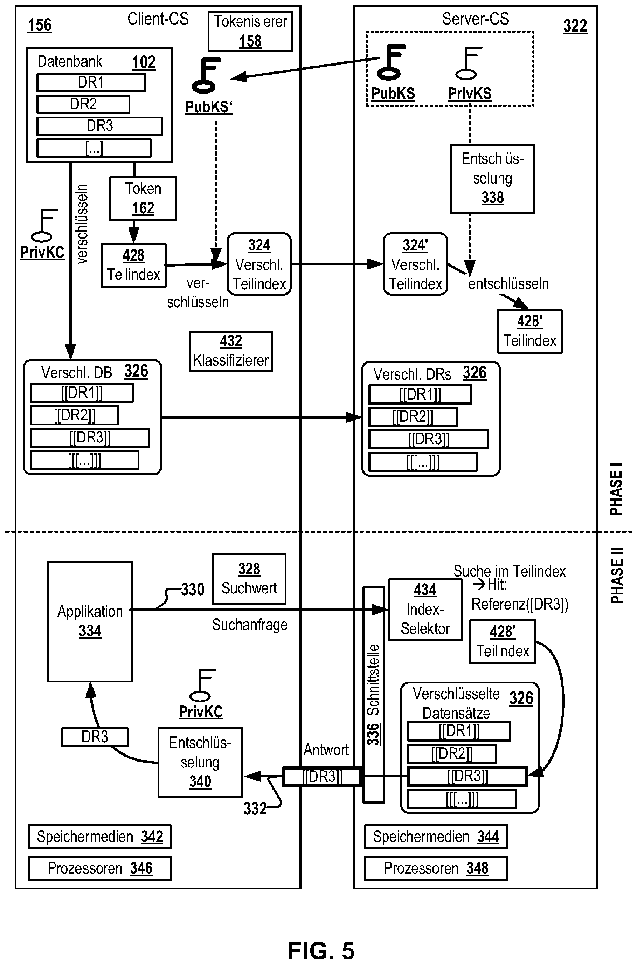

**Figur 5** zeigt weitere Details des Server-Computersystems 322 und eines 156 der Client-Computersysteme, gemäß einer weiteren Ausführungsform der Erfindung.

Dem Server-Computersystem ist ein asymmetrisches kryptographisches Schlüsselpaar zugeordnet, welches einen öffentlichen kryptographischen Schlüssel PubKS und einen privaten kryptographischen Schlüssel privKS beinhaltet. Der öffentliche Schlüssel wird in Kopie PubKS' dem Client-Computersystem zur Verfügung gestellt. Dies kann beispielsweise direkt erfolgen, also in dem das Client-Computersystem den Schlüssel direkt von dem Server-Computersystem empfängt. Die Schlüsselübertragung kann aber auch indirekt erfolgen, indem beispielsweise das Server-Computersystem seinen öffentlichen Schlüssel in einer öffentlich einsehbaren Datenbank hinterlegt und das Client-Computersystem den öffentlichen Schlüssel PubKS' von dieser Datenbank herunterlädt. Der private Schlüssel PrivKS dient der Entschlüsselung von Daten, die mit dem öffentlichen Schlüssel PubKS verschlüsselt wurden. Der private Schlüssel PrivKS ist vorzugsweise geschützt gespeichert und nur dem Server-Computersystem, nicht aber einem der Client-Computersysteme zugänglich.

Auch das Client-Computersystem verfügt über einen privaten Schlüssel privKC, der geschützt gespeichert ist, sodass der private Schlüssel PrivKC nur von dem Client-Computersystem 156 (und optional von weiteren, berechtigten Client-Computersystemen 157, 159) gelesen und verwendet werden kann, nicht jedoch vom Server-Computersystem.

Das Client Computersystem beinhaltet eine Tokenisierungslogik 158, einen Klassifizierer 432 zur Erzeugung der Teil-Tokenmengen, einen Indizierer zur Generierung von Teilindizes aus den Teil-Tokenmengen, und ein DBMS mit einer Datenbank 102 gemäß einer der hier bereits beschriebenen Ausführungsformen.

### Phase I

In einer ersten Phase wird von dem Client-Computersystem eine Tokenisierung der Feldwerte der Datensätze der Datenbank 102 vorgenommen. Die Token der Tokenmenge 162 (oder 153) werden von dem Klassifizierer klassifiziert und in Teil-Tokenmengen aufgeteilt, welche von einem Indexierer zur Erzeugung eines entsprechenden Teilindex verwendet werden wie z.B. in Figuren 1, 2 und 3 beschrieben wurde. Die generierten Teil-Indizes sowie die Datensätze der Datenbank 102 werden verschlüsselt. Bei der Verschlüsselung der Datensätze und der Teilindizes werden unterschiedliche kryptografische Schlüssel verwendet. Im Folgenden wird die Verarbeitung des Teilindex 428 näher beschrieben. Vorzugsweise werden sämtliche anderen Teilindizes in gleicher Weise verarbeitet, also verschlüsselt, an den Server übertragen und dort zur schnellen Identifikation gesuchter Datensätze verwendet wie im Folgenden beschrieben ist.

Vorzugsweise werden die Datensätze einzelnen verschlüsselt. Dies hat den Vorteil, dass diese auch einzeln in verschlüsselter Form zurückgegeben werden können. Die einzelnen Datensätze werden so verschlüsselt, dass das Client- Computersystem diese wieder entschlüsselt kann, nicht jedoch das Server- Computersystem 322, das die verschlüsselten Datensätze speichern und für ggf. eine Vielzahl an Clients vorhalten soll. Beispielsweise kann der Schlüssel PrivKV ein privater, symmetrischer kryptographische Schlüssel sein, der sowohl zur Verschlüsselung als auch zur Entschlüsselung von Daten verwendet werden kann. Alternativ dazu kann das Client-Computersystem über ein weiteres asymmetrisches kryptographisches Schlüsselpaar verfügen, wobei beide Schlüssel dieses Paares nur dem Client-Computersystem 156 (und gegebenenfalls noch weiteren berechtigten Client-Computersystemen), nicht jedoch dem Server-Computersystem bekannt sind. Ein Schlüssel dieses Paares dient zur Verschlüsselung der Datensätze, der andere Schlüssel des Paares zur Entschlüsselung der verschlüsselten Datensätze 326. Aus dem Datensatz DR1 etwa wird also der verschlüsselte Datensatz [[DR1]]. Aus dem Datensatz DR3 wird also der verschlüsselte Datensatz [[DR3]].

Den Teilindex 428 verschlüsselt das Client-Computersystem 156 dagegen mit dem öffentlichen Schlüssel PubKS des Server-Computers.

Die verschlüsselten Datensätze 326 und der verschlüsselte Teilindex 324 werden von dem Client- Computersystem an das Server- Computersystem übertragen. Dies kann beispielsweise direkt über das Netzwerk 155, zum Beispiel das Internet, erfolgen. Nach Ausführungsformen erfolgt die Verschlüsselung und Übertragung der Datensätze in regelmäßigen zeitlichen Abständen komplett oder inkrementell, wobei jeweils der Index neu gebildet, neu verschlüsselt und neu übertragen wird.

Der übertragene verschlüsselte Teilindex 324' wird vom Server-Computersystem mittels des privaten Schlüssels PrivKS des Server-Computers entschlüsselt und als eine unverschlüsselte Kopie 154' des Teilindex 428 auf ein oder mehreren Speichermedien 344, die von dem Server-Computersystem verwaltet werden, gespeichert.

Auch die empfangenen und verschlüsselten Datensätze 326 werden auf den Speichermedien 344 gespeichert, ohne diese jedoch zu entschlüsseln, da das Server-Computersystem nicht über die Schlüssel verfügt, die notwendig sind, um die Datensätze zu entschlüsseln.

Das Server-Computersystem stellt eine Schnittstelle 336 bereit, welche es dem Client-Computersystem 156, das den Index und die Datensätze bereitgestellt hat, ermöglicht, auf den Teilindex 428' zuzugreifen. Vorzugsweise ermöglicht die Schnittstelle auch weiteren Client-Computersystemen einen entsprechenden Zugriff auf den Index 428', wobei die weiteren Client-Computersysteme die gegebenenfalls vom Server-Computersystem bereitgestellten verschlüsselten Datensätze nur dann auswerten können, wenn sie ebenfalls über einen geeigneten Entschlüsselungsschlüssel PrivKC verfügen.

Während in der ersten Phase die Generierung Verschlüsselung und Verteilung von Index und Datensätzen beschrieben ist, wird in der zweiten Phase der Ablauf einer beispielhaften Suchanfrage anhand eines Beispiels beschrieben.

### Phase II

Im abgebildeten Beispiel sendet eine Client-Applikation 334, auf dem Client-Computersystem 156 instanziiert ist, eine Suchanfrage 330 über die Schnittstelle 336 an das Server-Computersystem. Die Suchanfrage beinhaltet einen Suchwert 328, zum Beispiel "2654645".

Als Antwort auf den Empfang der Suchanfrage analysiert der Index-Selektor 434 den Suchwert auf der Bitsequenzebene. Der Index-Selektor stellt fest, dass von allen übertragenen und entschlüsselten Teilindizes 426', 428', 430', der Teilindex 428' Token enthält, die dem Suchwert im Hinblick auf Bitsequenzlänge und/oder im Hinblick auf das Vorkommen bestimmter Bitmuster am ähnlichsten ist. Daraufhin wählt der Index-Selektor den Teilindex 128' aus. Das Server-Computersystem durchsucht den ausgewählten, unverschlüsselten Index 428' nach einem Token, das exakt dem Suchwert "2654645" entspricht. Beispielsweise kann der Suchlauf nach diesem Suchwert ein bestimmtes Token innerhalb des Index 428' identifizieren, welches den Datensatz DR3 referenziert. Der Datensatz DR3 liegt auf dem Server-Computersystem nur in verschlüsselter Form [[DR3]] vor. Als Antwort auf die Suchanfrage 330 gibt das Server-Computersystem also den identifizierten, verschlüsselten Datensatz [[DR3]] in einer Antwort-Nachricht 332 an das Client-Computersystem zurück. Eine Entschlüsselungslogik 340 des Client-Computersystems, die Zugriff auf den Entschlüsselung-Schlüssel PrivKC besitzt, entschlüsselt den Datensatz und liefert den entschlüsselten Datensatz DR3 an die Client-Applikationslogik 334 als das Ergebnis der Suchanfrage 330.

Anhand der Abbildung ist ersichtlich, dass für die Phase zwei ein Vorhandensein der Original-Datenbank 102 bzw. ein Vorhandensein der unverschlüsselten Datensätze DR1-DR7 auf dem Client-Computersystem nicht erforderlich ist. Es ist also möglich, dass nur ein bestimmtes Client-Computersystem 156 der Generierung und Verschlüsselung des Index bzw. der Verschlüsselung der Datensätze dient, während eine Vielzahl weiterer Client-Computersysteme 157, 159 ausschließlich Programlogik implementieren, die zur Durchführung der hier in Phase zwei aufgeführten Schritte erforderlich ist. Diese weiteren Client-Computersysteme benötigen also keinen öffentlichen Schlüssel des Servers PubKS und keine Tokenisierungslogik zur Erstellung des Index, benötigen aber eine Client-Applikation 334, eine Entschlüsselungslogik 340 und den entsprechenden Entschlüsselungsschlüssel PrivKC zur Entschlüsselung der Datensätze.

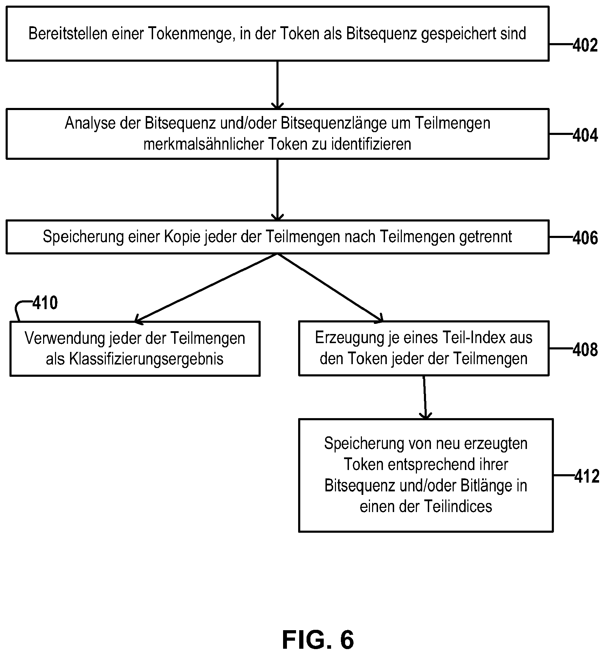

**Figur 6** zeigt ein Flussdiagramm eines Verfahrens zur Klassifikation von Daten gemäß einer Ausführungsform der Erfindung. In einem ersten Schritt 402 generiert eine Tokenisierungslogik 158 eine Tokenmenge 153 bereit. Beispielsweise kann zunächst eine redundante Menge 162 von Token durch Tokenisierung mehrerer Feldwerte mehrerer Datensätze DR1-DR8 erzeugt wurden, wobei die Token aus Feldwerten von mindestens zwei unterschiedlichen Feldtypen F1-F8 erzeugt wurden, wobei die Token in Form einer Bitsequenz gespeichert sind. Diese kann sodann in eine nicht-redundante Tokenmenge 153 überführt werden, indem Duplikationen entfernt werden. Im nächsten Schritt 404 führt eine Klassifikationslogik eine Analyse der Token der Tokenmenge auf der Bitsequenzebene durch, z.D. indem Bitsequenzlängen bestimmt und verglichen werden.

Als Ergebnis dieser Analyse werden Teilmengen 420, 422, 424 merkmalsähnlicher Token identifiziert. Die Klassifikationslogik 432 speichert in Schritt 406 eine Kopie jeder der Teilmengen merkmalsähnlicher Token in nach Teilmengen getrennter Form. Beispielsweise können die Token-Teilmengen in unterschiedlichen Dateien oder unterschiedlichen Verzeichnissen gespeichert werden. Es ist aber auch möglich, dass jede der Teilmengen in Form eines Teilindex 426, 428, 430 gespeichert wird. Jeder Teilindex enthält also die Token der Teilmenge, von welcher er abgeleitet ist, wobei die Position der Token innerhalb eines Teilindex unabhängig ist von dem Type des Feldes, von welchem sich das Token ableitet. Jede Teilmengenkopie repräsentiert jeweils eine Klasse merkmalsähnlicher Daten. Beispielsweise können die Klassen merkmalsähnlicher Daten in einer Kryptoanalyse jeweils als Kandidaten für ein bestimmtes Wort oder anderes semantisches Konzept interpretiert und weiterverarbeitet werden.

### Bezugszeichenliste

- DR1-DR7: Datensätze
- F1-F7: Typen von Datenfeldern
- 102: Datenbank
- 153: Tokenmenge
- 154: Index
- 154': Kopie von Index 154
- 155: Netzwerk
- 156: (Client-) Computersystem
- 157: Client-Computersystem
- 158: Tokenisierungslogik
- 159: Client-Computersystem
- 160: DBMS
- 162: Tokenmenge
- 170-176: Schritte
- 250: Menge an ersten Token
- 252: Menge an zweiten Token
- 254: Menge an fünften Token
- 322: Server-Computersystem
- 324: verschlüsselter Index
- 324': Kopie des verschlüsselten Index
- 326: verschlüsselte Datenbank
- 328: Suchwert
- 330: Suchanfrage
- 332: Antwort auf Suchanfrage
- 334: Client-Applikation
- 336: Schnittstelle
- 338: Entschlüsselungslogik des Server-Computersystems
- 340: Entschlüsselungslogik des Client-Computersystems
- 342: Speichermedien
- 344: Speichermedien
- 346: Prozessor(en)
- 348: Prozessor(en)
- PubKS: öffentlicher Schlüssel des Server-Computersystems
- PrivKS: privater Schlüssel des Server-Computersystems
- PrivCS: privater Schlüssel des Client-Systems
- 402-412: Schritte
- 420: Teilmenge der Tokenmenge
- 422: Teilmenge der Tokenmenge
- 424: Teilmenge der Tokenmenge
- 426: Teilindex
- 428: Teilindex
- 430: Teilindex
- 432: Klassifikationslogik
- 434: Indexselektor
- 438: Arbeitsspeicher

## Patentansprüche

1. Computerimplementiertes Verfahren zur Datenklassifikation in Form einer automatischen Bildklassifizierung in Portalen und Plattformen, die der Verwaltung von Bildern dienen, das Verfahren umfassend:
- Bereitstellen (402) einer Tokenmenge (153), die Token beinhaltet, die aus mehreren Feldwerten mehrerer Datensätze (DR1-DR8) durch Tokenisierung erzeugt wurden, wobei die Tokenisierung von Datensätzen zur Erzeugung der Token bedeutet, dass die Datensätze nach einem bestimmten Schema in mehrere Bestandteile zerteilt werden, wobei die Bestandteile die Token darstellen, wobei die Token aus Feldwerten von mindestens zwei unterschiedlichen Feldtypen (F1-F7) erzeugt wurden, wobei die Token in Form einer Bitsequenz gespeichert sind;
- Analyse (404) von einem oder mehreren Merkmalen der Token auf der Ebene der Bitsequenz, um Teilmengen (420, 422, 424) von im Hinblick auf das Klassifizierungskriterium der Bitsequenzlänge merkmalsähnlichen Token zu identifizieren;
- Speichern (406) einer Kopie jeder der bei der Analyse identifizierten Teilmengen merkmalsähnlicher Token in nach Teilmengen getrennter Form (426, 428, 430), wobei jede Teilmengenkopie jeweils eine Klasse merkmalsähnlicher Daten repräsentiert,
- wobei es sich bei den Token um Bitsequenzen handelt, die jeweils ein Bild kodieren, wobei die Bitsequenzlänge die Bildgröße repräsentiert,
- wobei die Teilmengen der Token zumindest eine Kleinbild-Teilmenge und eine Großbild-Teilmenge beinhalten,
- wobei in der Kleinbild-Teilmenge selektiv Token enthalten sind, deren Bitsequenzlänge unterhalb eines ersten Schwellenwerts liegt, und
- wobei in der Großbild-Teilmenge selektiv Token enthalten sind, deren Bitsequenzlänge einen zweiten Schwellenwert überschreitet,
- sodass die automatische Klassifizierung von Bildern anhand deren Auflösung bzw. Qualität vorgenommen wird.

2. Das computerimplementierte Verfahren nach Anspruch 1, ferner umfassend:
- Erzeugung (408) eines Teilindex (426, 428, 430) aus jeder der Teilmengen (420, 422, 424) merkmalsähnlicher Token;
- Bereitstellung eines Indexauswahlprogramms (434), welches dazu konfiguriert ist, automatisch denjenigen der Teilindices zu identifizieren, dessen Token einem Datenwert bezüglich der Bitsequenzlänge am ähnlichsten ist.

3. Das computerimplementierte Verfahren nach Anspruch 2, wobei die Token-menge als durchsuchbarer Index (154) gespeichert ist oder zur Erstellung eines durchsuchbaren Index verwendet wird, ferner umfassend:
- Empfang einer Suchanfrage (330), wobei die Suchanfrage einen Suchwert (328) beinhaltet;
- Analyse des Suchwerts durch das Indexauswahlprogramm (434) und Identifikation desjenigen der Teilindices (426, 428, 430), dessen Token dem Suchwert bezüglich der Bitsequenzlänge am ähnlichsten ist;
- Durchsuchen des identifizierten Teilindex anstatt des Index (154) nach dem Suchwert.

4. Das computerimplementierte Verfahren nach Anspruch 3, ferner umfassend:
- Identifizierung eines indizierten Tokens innerhalb des identifizierten Teilindex, welcher identisch ist zu dem Suchwert;
- Analyse von Datensatz-Zeigern, die in dem Teilindex mit dem identifizierten Token verknüpft gespeichert sind, um ein oder mehrere der Datensätze zu identifizieren, welche ein oder mehrere Feldwerte beinhalten, aus welchen das indizierte Token erzeugt wurde, wobei die Datensätze in einer Datenbank (102) gespeichert sind,
- Zurückgabe der ein oder mehreren identifizierten Datensätze oder einer Referenz auf die ein oder mehreren identifizierten Datensätze als Antwort auf die Suchanfrage.

5. Das computerimplementierte Verfahren nach einem der Ansprüche 2-4, ferner umfassend:
- Empfang einer Schreibanfrage, wobei die Schreibanfrage einen Datenwert (DR8.F6) beinhaltet;
- Als Antwort auf den Empfang der Schreibanfrage, automatische Zerlegung des empfangenen Datenwerts durch die Tokenisierungslogik (158), die zur Tokenisierung der Datensätze verwendet wurde, in mehrere neue Token (162'), wobei jedes neue Token als Bitsequenz in einem flüchtigen oder nicht-flüchtigen Speichermedium gespeichert ist;
- Analyse jedes der neuen Token durch ein Indexauswahlprogramm (434) und Identifikation desjenigen der Teilindices (426, 428, 430), dessen Token dem neuen Token bezüglich der Bitsequenzlänge am ähnlichsten ist;
Speichern des neuen Token in dem identifizierten Teilindex zusätzlich zu oder anstelle von Speicherung des neuen Token in einem Gesamtindex (154) der Token.

6. Das computerimplementierte Verfahren nach einem der vorigen Ansprüche,
- wobei die Anzahl der Teilmengen nicht vorgegeben, sondern dynamisch als Teil des Ergebnisses der Analyse der Merkmale der Token ermittelt, und
- wobei die Analyse zur Identifikation der Teilmengen (420, 422, 424) merkmalsähnlicher Token von einem nichtüberwachten Machinelearning Algorithmus durchgeführt wird.

7. Das computerimplementierte Verfahren nach einem der vorigen Ansprüche, wobei die Datensätze in verschlüsselter Form in einer Datenbank gespeichert sind,
- wobei das Bereitstellen (402) der Tokenmenge (153) umfasst eine Anwendung einer Tokenisierungslogik auf die verschlüsselten Feldwerte der Datensätze auf der Bitsequenzebene, um die Token zu generieren;
- wobei die Analyse (404) der Merkmale der Token auf der Ebene der Bitsequenz der Token erfolgt.

8. Das computerimplementierte Verfahren nach einem der vorigen Ansprüche, ferner umfassend:
- Verwendung der Teilmengen merkmalsähnlicher Token jeweils als Input eines Dekodieralgorithmus, wobei die Teilmengen jeweils einen Kandidaten für ein natürlichsprachliches Wort oder einen anderen von einem Menschen interpretierbaren Code repräsentieren und wobei der Dekodieralgorithmus dazu ausgebildet ist, durch Analyse der Token einer Teilmenge das natürlichsprachliche Wort oder den anderen von einem Menschen interpretierbaren Code zu identifizieren.

9. Das computerimplementierte Verfahren nach einem der vorigen Ansprüche, wobei die Erzeugung der Tokenmenge (153) umfasst:
- Erzeugen (172) von ersten Token (250) aus ersten Feldwerten mehrerer Datensätze, wobei die ersten Feldwerte in ersten der Felder gespeichert sind, wobei die ersten Felder einem ersten Feldtyp (F1) angehören;
- Erzeugen (174) von zweiten Token (252, 254) aus zweiten Feldwerten der mehreren Datensätze, wobei die zweiten Feldwerte in zweiten der Felder gespeichert sind, wobei die zweiten Felder einem zweiten Feldtyp (F2, F5) angehören;
wobei insbesondere auf die ersten und zweiten Felder die gleiche, generische Tokenisierungslogik (158) angewandt wird.

10. Das computerimplementierte Verfahren nach einem der vorigen Ansprüche,
wobei die Datensätze in einer Datenbank gespeichert sind, die von einem DBMS (160) verwaltet wird, wobei die Datensätze unterschiedlich viele Felder umfassen;
und/oder wobei mehrere der Felder eines jeden Datensatzes ein gemeinsames, generisches Datenformat besitzen, wobei das generische Datenformat die Speicherung von Feldwerten erlaubt, die sowohl Textdaten als auch zumindest Bilddaten, Audiodaten und/oder Videodaten beinhalten.

11. Das computerimplementierte Verfahren nach einem der vorigen Ansprüche, wobei die Tokenisierungslogik dazu ausgebildet ist, die Bitsequenz eines Datenfeldwertes auf der Bitebene zu analysieren und in Abhängigkeit von darin erkannten Bitsequenzmustern zu tokenisieren.

12. Das computerimplementierte Verfahren nach einem der vorigen Ansprüche, ferner mit:
- Speicherung der Datensätze in einer Datenbank, die durch ein DBMS verwaltet wird, wobei es sich bei dem DBMS um ein NoSQL-DBMS handelt.

13. Das computerimplementierte Verfahren nach einem der vorigen Ansprüche, wobei die Tokenisierungslogik ein generischer Tokenisierer ist, der zur Tokenisierung von Feldwerten von Feldern unterschiedlicher Feldtypen ausgebildet ist, wobei die Anwendung der generischen Tokenisierungslogik auf einen Feldwert umfasst:
- Erkennen von Daten unterschiedlichen Datentyps innerhalb des Feldwertes, wobei die Daten unterschiedlichen Datentyps Textdaten sowie Bilddaten und einen oder mehrere weitere Datentypen umfassen, wobei die ein oder mehreren weiteren Datentypen Audiodaten und/oder Videodaten umfassen.

14. Das computerimplementierte Verfahren nach einem der vorigen Ansprüche, wobei die Tokenmenge (153) als durchsuchbarer Index ausgebildet ist oder zur Erzeugung des durchsuchbaren Index (154) verwendet wird, wobei der Ort der Speicherung der Token in der Struktur des Index unabhängig davon erfolgt von welchem der Feldtypen die Token stammen, wobei vorzugsweise die in dem Index (154) gespeicherten Token frei sind von Referenzen auf Felder oder Feldtypen, die zur Speicherung von Feldwerten verwendet wurden, die zur Erzeugung der Token dienten.

15. Computersystem zur Datenklassifikation in Form einer automatischen Bildklassifizierung in Portalen und Plattformen, die der Verwaltung von Bildern dienen, umfassend:
- ein oder mehrere Prozessoren (346);
- ein Datenspeichermedium (342),
- Ein DBMS (160), das dazu konfiguriert ist, Datensätze (DR1-DR8) jeweils als eine Menge aus mehreren Feldwerten in den ein oder mehreren Datenspeichermedien zu speichern, wobei die Feldwerte jeweils in einem Feld gespeichert werden, wobei die Felder jedes der Datensätze mindestens zwei unterschiedlichen Feldtypen (F1-F8) angehören,
- Programmlogik (158), die zur Erstellung einer Tokenmenge (153) konfiguriert ist, wobei die Tokenmenge Token beinhaltet, die aus mehreren Feldwerten mehrerer der Datensätze (DR1-DR8) durch Tokenisierung erzeugt wurden, wobei die Tokenisierung von Datensätzen zur Erzeugung der Token bedeutet, dass die Datensätze nach einem bestimmten Schema in mehrere Bestandteile zerteilt werden, wobei die Bestandteile die Token darstellen, wobei die Token aus Feldwerten von mindestens zwei unterschiedlichen Feldtypen erzeugt wurden, wobei die Token in Form einer Bitsequenz gespeichert sind;
- Eine Klassifikationslogik (324), die zur Analyse (404) von einem oder mehreren Merkmalen der Token auf der Ebene der Bitsequenz ausgebildet ist, um Teilmengen (420, 422, 424) von im Hinblick auf das Klassifizierungskriterium der Bitsequenzlänge merkmalsähnlichen Token zu identifizieren, und welche dazu ausgebildet ist, eine Kopie jeder der Teilmengen merkmalsähnlicher Token in nach bei der Analyse identifizierten Teilmengen getrennter Form (426, 428, 430) in dem Datenspeichermedium zu speichern, wobei jede Teilmengenkopie jeweils eine Klasse merkmalsähnlicher Daten repräsentiert,
- wobei es sich bei den Token um Bitsequenzen handelt, die jeweils ein Bild kodieren, wobei die Bitsequenzlänge die Bildgröße repräsentiert,
- wobei die Teilmengen der Token zumindest eine Kleinbild-Teilmenge und eine Großbild-Teilmenge beinhalten,
- wobei in der Kleinbild-Teilmenge selektiv Token enthalten sind, deren Bitsequenzlänge unterhalb eines ersten Schwellenwerts liegt, und
- wobei in der Großbild-Teilmenge selektiv Token enthalten sind, deren Bitsequenzlänge einen zweiten Schwellenwert überschreitet,
sodass die automatische Klassifizierung von Bildern anhand deren Auflösung bzw. Qualität vorgenommen wird.

## Claims

1. A computer-implemented method for data classification in the form of automatic image classification in portals and platforms used for management of images, the method comprising:
- providing (402) a token set (153), which contains tokens which were generated from a plurality of field values of a plurality of data records (DR1-DR8) by tokenization, tokenization of data records for generating the tokens meaning that the data records are split into a plurality of components in accordance with a set model, the components representing the tokens, the tokens having been generated from field values of at least two different field types (F1-F7), the tokens being stored in the form of a bit sequence;
- analyzing (404) one or more features of the tokens at the level of the bit sequence in order to identify subsets (420, 422, 424) of tokens that have similar features with regard to the classification criterion of the bit-sequence length;
- storing (406) a copy of each of the subsets of feature-similar tokens identified in the analysis in a form (426, 428, 430) that is separated by subset, each subset copy representing a class of feature-similar data,
- wherein the tokens are bit sequences that each encode an image, the bit-sequence length representing the image size,
- wherein the subsets of the tokens contain at least one small-image subset and one large-image subset,
- wherein tokens of which the bit-sequence length is below a first threshold value are selectively contained in the small-image subset, and
- wherein tokens of which the bit-sequence length exceeds a second threshold value are selectively contained in the large-image subset,
- such that the automatic classification of images is performed on the basis of their resolution or quality.

2. The computer-implemented method according to claim 1, further comprising:
- generating (408) a sub-index (426, 428, 430) from each of the subsets (420, 422, 424) of feature-similar tokens,
- providing an index-selection program (434), which is configured to automatically identify those sub-indices of which the token is most similar to a data value in terms of bit-sequence length.

3. The computer-implemented method according to claim 2, wherein the token set is stored as a searchable index (154) or is used for compiling a searchable index, further comprising:
- receiving a search query (330), the search query containing a search value (328);
- analyzing the search value by means of the index-selection program (434) and identifying those sub-indices (426, 428, 430) of which the token is most similar to the search value in terms of bit-sequence length;
- searching the identified sub-index instead of the index (154) for the search value.

4. The computer-implemented method according to claim 3, further comprising:
- identifying an indexed token within the identified sub-index which is identical to the search value;
- analyzing data-record pointers that are stored in an encrypted manner in the sub-index with the identified token in order to identify one or more of the data records which contain one or more field values from which the indexed token was generated, the data records being stored in a database (102),
- returning the one or more identified data records or a reference to the one or more identified data records as a response to the search query.

5. The computer-implemented method according to any one of claims 2-4, further comprising:
- receiving a write query, the write query containing a data value (DR8.F6);
- as a response to receiving the write query, automatically breaking down the received data value using the tokenization logic (158) that has been used for tokenizing the data records into a plurality of new tokens (162'), each new token being stored as a bit sequence in a volatile or non-volatile memory medium;
- analyzing each of the new tokens by means of an index-selection program (434) and identifying those sub-indices (426, 428, 430) of which the token is most similar to the new token in terms of bit-sequence length;
storing the new token in the identified sub-index in addition to or instead of storing the new token in an overall index (154) of the tokens.

6. The computer-implemented method according to any one of the preceding claims,
- wherein the number of subsets is not predetermined, but instead is dynamically identified as part of the result of the analysis of the features of the tokens, and
- wherein the analysis for identifying the subsets (420, 422, 424) of feature-similar tokens is carried out by an unmonitored machine-learning algorithm.

7. The computer-implemented method according to any one of the preceding claims,
wherein the data records are stored in a database in encrypted form,
- wherein providing (402) the token set (153) includes applying a tokenization logic to the encrypted field values of the data records at the bit-sequence level to generate the tokens;
- wherein analyzing (404) the features of the tokens is carried out at the level of the bit sequence of the tokens.

8. The computer-implemented method according to any one of the preceding claims, further comprising:
- using each of the subsets of feature-similar tokens as an input to a decoding algorithm, the subsets each representing a candidate for a natural-language word or a different code that can be interpreted by a person and the decoding algorithm being configured to identify the natural-language word or the different code that can be interpreted by a person by analyzing the tokens in a subset.

9. The computer-implemented method according to any one of the preceding claims,
wherein the generation of the token set (153) comprises:
- generating (172) first tokens (250) from first field values of a plurality of data records, the first field values being stored in first fields of the fields, the first fields belonging to a first field type (F1);
- generating (174) second tokens (252, 254) from second field values of the plurality of data records, the second field values being stored in second fields of the fields, the second fields belonging to a second field type (F2, F5);
the same generic tokenization logic (158) in particular being applied to the first and the second fields.

10. The computer-implemented method according to any one of the preceding claims,
wherein the data records are stored in a database managed by a DBMS (160), the data records comprising different numbers of fields;
and/or wherein a plurality of the fields of each data record have a common, generic data format, the generic data format allowing field values to be stored which contain both text data and at least image data, audio data and/or video data.

11. The computer-implemented method according to any one of the preceding claims,
wherein the tokenization logic is configured to analyze the bit sequence of a data field value at the bit level and tokenize it on the basis of bit-sequence patterns recognized therein.

12. The computer-implemented method according to any one of the preceding claims, further comprising:
- storing the data records in a database managed by a DBMS, the DBMS being a NoSQL DBMS.

13. The computer-implemented method according to any one of the preceding claims,
wherein the tokenization logic is a generic tokenizer which is configured to tokenize field values of fields of different field types, the application of the generic tokenization logic to a field value comprising:
- recognizing data of different data types within the field value, the data of different data types comprising text data as well as image data and one or more further data types, the one or more further data types comprising audio data and/or video data.

14. The computer-implemented method according to any one of the preceding claims,
wherein the token set (153) is configured as a searchable index (154) or is used for generating the searchable index, the storage location of the tokens in the structure of the index being irrespective of which of the field types the tokens originate from, the tokens stored in the index (154) preferably being free of references to fields or field types which have been used for storing field values used for generating the tokens.

15. A computer system for data classification in the form of automatic image classification in portals and platforms used for management of images, comprising:
- one or more processors (346);
- a data memory medium (342);
- a DBMS (160), which is configured to store data records (DR1-DR8) as a set of a plurality of field values in the one or more data memory media in each case, the field values each being stored in one field, the fields of each of the data records belonging to at least two different field types (F1-F8),
- program logic (158), which is configured to compile a token set (153), the token set containing tokens which were generated from a plurality of field values of a plurality of the data records (DR1-DR8) by tokenization, tokenization of data records for generating the tokens meaning that the data records are split into a plurality of components in accordance with a set model, the components representing the tokens, the tokens having been generated from field values of at least two different field types, the tokens being stored in the form of a bit sequence;
- a classification logic (324), which is configured to analyze (404) one or more features of the tokens at the level of the bit sequence in order to identify subsets (420, 422, 424) of tokens that have similar features with regard to the classification criterion of the bit-sequence length, and which is configured to store a copy of each of the subsets of feature-similar tokens in the data memory medium in a form (426, 428, 430) separated by subsets identified in the analysis, each subset copy representing a class of feature-similar data,
- wherein the tokens are bit sequences that each encode an image, the bit-sequence length representing the image size,
- wherein the subsets of the tokens contain at least one small-image subset and one large-image subset,
- wherein tokens of which the bit-sequence length is below a first threshold value are selectively contained in the small-image subset, and
- wherein tokens of which the bit-sequence length exceeds a second threshold value are selectively contained in the large-image subset,
such that the automatic classification of images is performed on the basis of their resolution or quality.

## Revendications

1. Procédé mis en oeuvre par ordinateur permettant la classification de données sous forme d'une classification d'images automatique dans des portails et des plateformes qui servent à la gestion d'images, le procédé comprenant :
- la préparation (402) d'un ensemble de jetons (153) qui contient des jetons qui ont été créés à partir de plusieurs valeurs de champs de plusieurs ensembles de données (DR1 à DR8) par tokénisation, dans lequel la tokénisation d'ensembles de données permettant la création des jetons signifie que les ensembles de données sont subdivisés selon un schéma déterminé en plusieurs constituants, où les constituants représentent les jetons, où les jetons ont été créés à partir de valeurs de champs d'au moins deux types de champs (F1 à F7) différents, où les jetons sont enregistrés sous forme d'une séquence de bits ;
- l'analyse (404) d'une ou de plusieurs caractéristiques des jetons sur le plan de la séquence de bits afin d'identifier des sous-ensembles (420, 422, 424) de jetons de caractéristiques semblables en ce qui concerne la longueur de séquence de bits selon le critère de classification ;
- l'enregistrement (406) d'une copie de chacun des sous-ensembles de caractéristiques semblables sous une forme (426, 428, 430) séparée selon les sous-ensembles, dans lequel chaque copie de sous-ensemble représente respectivement une classe de données de caractéristiques semblables,
- où, dans le cas des jetons, il s'agit de séquences de bits qui codent respectivement une image, où la longueur de séquence de bits représente la taille de l'image,
- où les sous-ensembles de jetons contiennent au moins un sous-ensemble de d'images en petit format et un sous-ensemble d'images en grand format,
- où, dans le sous-ensemble d'images en petit format sont contenus sélectivement des jetons dont la longueur de la séquence de bits se situe en-dessous d'une première valeur de seuil, et
- où dans le sous-ensemble d'images en grand format sont contenus sélectivement des jetons dont la longueur de la séquence de bits dépasse une deuxième valeur de seuil,
- de sorte que la classification automatique des images est effectuée à l'aide de leur résolution, respectivement, qualité.

2. Procédé mis en oeuvre par ordinateur selon la revendication 1, comprenant en outre :
- la création (408) d'un index partiel (426, 428, 430) à partir de chacun des sous-ensembles (420, 422, 424) de jetons de caractéristiques semblables,
- la préparation d'un programme de sélection d'index (434), lequel est conçu pour identifier automatiquement les index partiels en question dont le jeton est le plus semblable à une valeur de donnée en ce qui concerne la longueur de la séquence de bits.

3. Procédé mis en oeuvre par ordinateur selon la revendication 2, dans lequel l'ensemble de jetons est enregistré sous forme d'index consultable (154) ou est employé pour l'établissement d'un index consultable, comprenant en outre :
- la réception d'une demande de recherche (330), dans lequel la demande de recherche contient une valeur de recherche (328) ;
- l'analyse de la valeur de recherche par le programme de sélection d'index (434) et l'identification de l'index partiel en question parmi les index partiels (426, 428, 430) dont le jeton est le plus semblable à la valeur de recherche en ce qui concerne la longueur de la séquence de bits,
- la recherche de l'index partiel identifié au lieu de l'index (154) en fonction de la valeur de recherche.

4. Procédé mis en oeuvre par ordinateur selon la revendication 3, comprenant en outre :
- l'identification d'un jeton indexé dans l'index partiel identifié, lequel est identique à la valeur de recherche ;
- l'analyse de pointeurs d'ensembles de données qui sont enregistrés combinés avec le jeton d'identification dans l'index partiel afin d'identifier un ou plusieurs parmi les ensembles de données, lesquels contiennent une ou plusieurs valeurs de champs à partir desquelles le jeton indexé a été créé, dans lequel les ensembles de données sont enregistrés dans une banque de données (102),
- la restitution d'un ou de plusieurs ensembles de données identifiés ou d'une référence concernant l'ensemble ou les ensembles de données identifiés en réponse à la demande de recherche.

5. Procédé mis en oeuvre par ordinateur selon l'une des revendications 2 à 4, comprenant en outre :
- la réception d'une demande d'écriture, dans lequel la demande d'écriture contient une valeur de donnée (DR8.F6) ;
- en réponse à la réception de la demande d'écriture, le démontage automatique de la valeur de donnée réceptionnée par la logique de tokénisation (158) qui a été employée pour la tokénisation des ensembles de données en plusieurs nouveaux jetons (162'), où chaque nouveau jeton est enregistré sous forme de séquence de bits dans un support de stockage volatil ou non volatil ;
- l'analyse de chacun des nouveaux jetons par un programme de sélection d'index (434) et l'identification de l'index partiel (426, 428, 430) en question dont le jeton est le plus semblable au nouveau jeton en ce qui concerne la séquence de bits et/ou la longueur de séquence de bits ;
l'enregistrement du nouveau jeton dans l'index partiel identifié en complément ou à la place de l'enregistrement du nouveau jeton dans un index global (154) des jetons.

6. Procédé mis en oeuvre par ordinateur selon l'une des revendications précédentes,
- dans lequel le nombre de sous-ensembles n'est pas prédéfini, mais est déterminé de manière dynamique sous forme de résultat de l'analyse des caractéristiques des jetons, et
- dans lequel l'analyse pour l'identification des sous-ensembles (420, 422, 424) de jetons de caractéristiques semblables est effectuée par un algorithme d'apprentissage machine non supervisé.

7. Procédé mis en oeuvre par ordinateur selon l'une des revendications précédentes, dans lequel les ensembles de données sont stockés dans la banque de données sous forme chiffrée,
- dans lequel la préparation (402) de l'ensemble de jetons (153) comprend une application d'une logique de tokénisation pour les valeurs de champs chiffrées des ensembles de données sur le plan de séquence de bits afin de générer les jetons ;
- dans lequel l'analyse (404) des caractéristiques des jetons a lieu sur le plan de la séquence de bits des jetons.

8. Procédé mis en oeuvre par ordinateur selon l'une des revendications précédentes, comprenant en outre :
- l'emploi des sous-ensembles de jetons de caractéristiques semblables respectivement en tant qu'entrées d'un algorithme de décodage, dans lequel les sous-ensembles représentent respectivement un candidat pour un mot en langage naturel ou un autre code interprétable par un humain et dans lequel l'algorithme de décodage est conçu pour, par l'analyse des jetons d'un sous-ensemble, identifier le mot en langage naturel ou l'autre code interprétable par un humain.

9. Procédé mis en oeuvre par ordinateur selon l'une des revendications précédentes, dans lequel la création de l'ensemble de jetons (153) comprend :
- la création (172) de premiers jetons (250) à partir de premières valeurs de champs de plusieurs ensembles de données, où les premières valeurs de champs sont enregistrées dans des premiers parmi les champs, où les premiers champs font partie d'un premier type de champs (F1) ;
- la création (174) de deuxièmes jetons (252, 254) à partir de deuxièmes valeurs de champs de plusieurs ensembles de données, où les deuxièmes valeurs de champs sont enregistrées dans des deuxièmes parmi les champs, où les deuxièmes champs font partie d'un deuxième type de champs (F2, F5), dans lequel, de préférence, la même logique de tokénisation (158) générique est employée pour les premiers et les deuxièmes champs.

10. Procédé mis en oeuvre par ordinateur selon l'une des revendications précédentes,
dans lequel les ensembles de données sont enregistrés dans une banque de données qui est gérée par un DBMS (160), dans lequel les ensembles de données comprennent beaucoup de champs différents ;
et/ou dans lequel plusieurs parmi les champs d'un ensemble de données en question possèdent un format de données commun générique, dans lequel le format de données générique permet l'enregistrement de valeurs de champs qui contiennent à la fois des données de texte ainsi qu'au moins des données d'images, des données audio et/ou des données vidéo.

11. Procédé mis en oeuvre par ordinateur selon l'une des revendications précédentes, dans lequel la logique de tokénisation est conçue pour analyser la séquence de bits d'une valeur de champ de donnée sur le plan des bits et pour la tokéniser en fonction de modèles de séquences de bits y étant reconnus.

12. Procédé mis en oeuvre par ordinateur selon l'une des revendications précédentes, avec en outre :
- l'enregistrement des ensembles de données dans une banque de données qui est gérée par un DBMS, où, dans le cas du DBMS, il s'agit d'un DBMS No SQL.

13. Procédé mis en oeuvre par ordinateur selon l'une des revendications précédentes, dans lequel la logique de tokénisation est un tokéniseur générique qui est conçu pour la tokénisation de valeurs de champs de champs de types de champs variables, dans lequel l'application de la logique de tokénisation générique sur une valeur de champ comprend :
- la reconnaissance de données de types de données différentes dans la valeur de champ, dans lequel les données de type de données différentes comprennent des données de texte ainsi que des données d'images et un ou plusieurs autres types de données, dans lequel le ou les autres types de données comprennent des données audio et/ou des données vidéo.

14. Procédé mis en oeuvre par ordinateur selon l'une des revendications précédentes, dans lequel l'ensemble de jetons (153) est conçu sous forme d'index consultable ou est employé pour la création de l'index consultable (154), dans lequel l'endroit de l'enregistrement des jetons a lieu dans la structure de l'index de manière indépendante du fait de quels types de champs proviennent les jetons, dans lequel, de préférence, les jetons stockés dans l'index (154) sont exempts de références concernant les champs ou des types de champs qui ont été employés pour le stockage de valeurs de champs qui ont servi à la création des jetons.

15. Système informatique permettant la classification de données sous forme d'une classification d'images automatique dans des portails et des plateformes qui servent à la gestion d'images, comprenant :
- un ou plusieurs processeurs (346) ;
- un support de stockage de données (342),
- un DBMS (160) qui est conçu pour stocker des ensembles de données (DR1 à DR8) respectivement sous forme d'un ensemble de plusieurs valeurs de champs dans le ou les supports de stockage de données, où les valeurs de champs sont respectivement enregistrées dans un champ, où les champs de chacun des ensembles de données font partie d'au moins deux types de champs (F1 à F8) différents,
- une logique de programme (158), qui est conçue pour l'établissement d'un ensemble de jetons (153), où l'ensemble de jetons contient des jetons qui ont été créés à partir de plusieurs valeurs de champs de plusieurs parmi les ensembles de données (DR1 à DR8) par tokénisation, où la tokénisation d'ensembles de données permettant la création des jetons signifie que les ensembles de données sont subdivisés selon un schéma déterminé en plusieurs constituants, où les constituants représentent les jetons, où les jetons ont été créés à partir d'au moins deux types de champs différents, où les jetons sont stockés sous forme de séquences de bits ;
- une logique de classification (324) qui est conçue pour l'analyse (404) d'une ou de plusieurs caractéristiques des jetons sur le plan de la séquence de bits afin d'identifier des sous-ensembles (420, 422, 424) de jetons de caractéristiques semblables en ce qui concerne la longueur de la séquence de bits, et laquelle est conçue pour stocker une copie de chacun des sous-ensembles de jetons de caractéristiques semblables selon une forme (426, 428, 430) séparée en fonction des sous-ensembles dans le support de stockage de données, où chaque copie de sous-ensemble représente respectivement une classe de données de caractéristiques semblables ;
- - où, dans le cas des jetons, il s'agit de séquences de bits qui codent respectivement une image, où la longueur de la séquence de bits représente la taille de l'image,
- où les sous-ensembles de jetons contiennent au moins un sous-ensemble de d'images en petit format et un sous-ensemble d'images en grand format,
- où, dans le sous-ensemble d'images en petit format sont contenus sélectivement des jetons dont la longueur de séquence de bits se situe en-dessous d'une première valeur de seuil, et
- où dans le sous-ensemble d'images en grand format sont contenus sélectivement des jetons dont la longueur de la séquence de bits dépasse une deuxième valeur de seuil,
- de sorte que la classification automatique des images est effectuée à l'aide de leur résolution, respectivement, qualité.
